(19) Europäisches Patentamt
European Patent Office
Office européen des brevets

(11) **EP 4 246 207 A1**

(12) **EUROPEAN PATENT APPLICATION**

(43) Date of publication:
**20.09.2023  Bulletin 2023/38**

(21) Application number: **22382246.1**

(22) Date of filing: **15.03.2022**

(51) International Patent Classification (IPC):
**G02B 26/10** $^{(2006.01)}$      **G02B 26/08** $^{(2006.01)}$

(52) Cooperative Patent Classification (CPC):
**G02B 26/0875; G02B 26/101**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Consejo Superior De Investigaciones Científicas**
  **28006 Madrid (ES)**
• **2Eyes Vision, S.L.**
  **28760 Tres Cantos (ES)**

(72) Inventors:
• **CURATOLO, Andrea**
  **28006 Madrid (ES)**
• **URIZAR URSUA, María Pilar**
  **28760 Tres Cantos (ES)**
• **MARCOS CELESTINO, Susana**
  **28006 Madrid (ES)**
• **GAMBRA URRALBURU, Enrique**
  **28760 Tres Cantos (ES)**

(74) Representative: **Elion IP, S.L.**
  **Paseo Castellana, 150-4 dcha**
  **28046 Madrid (ES)**

(54) **APPARATUS AND METHOD FOR DISPLACING AND/OR CHANGING A DIRECTION OF A LIGHT BEAM AXIS**

(57)    An apparatus and a method for displacing and/or for changing a direction of an input light beam axis (BAA) of an input light beam (IBA) is disclosed. The apparatus comprises:
- a first lens (ETL1) and a second lens (ETL2) having adjustable focal lengths, the second lens being arranged sequentially after the first lens; the first lens comprising a front principal point (PP1) at an offset (h1A) from an intersection between the front principal plane (CP1) of the first lens and a straight line comprising the input light beam axis (BAA); the second lens comprising a front principal plane (CP2) at a distance (d) from a back principal plane (CP1) of the first lens (ETL1);
- means for adjusting the focal length (f1A, f1B) of the first lens (ETL1) such that the focal length (f1A, f1B) of the first lens sets an intersection point (IPA, IPB);
- means for adjusting the focal length (f2A, f2B) of the second lens (ETL2) such that the focal length (f2A, f2B) of the second lens (ETL2) equals a distance between the front principal plane (CP2) of the second lens (ETL2) and the intersection point (IPA, IPB);
wherein a direction of a displaced and/or deflected light beam axis (DAA, DAB) of a light beam (DBA, DBB) outputted from the second lens (ETL2) is parallel to a target direction (TDA).

FIG. 2A

FIG. 2B

## Description

## TECHNICAL FIELD

The present invention relates in general to the field of optics and, more particularly, to the field of displacement and/or to the field of deflection of a light beam axis.

## STATE OF THE ART

Optical beam scanning involves a controlled displacement and deflection of visible or invisible optical beams. Optical beam scanning is used to transversely scan a beam across a specimen in many devices, including optical coherence tomography (OCT) systems and in confocal microscopes, in some rapid prototyping 3-D printers, in machines for material processing, in laser engraving machines, in laser printers, in laser shows, in laser TVs, and in barcode scanners.

A subset of these applications requires specific optical beam scanning paradigms, such as beam steering, i.e., where the axis of the output light beam is deflected about a pivot point, the pivot point having a constant location; and/or beam shifting, i.e., where the axes of the output light beams are parallel among themselves; and/or telecentric beam shifting, i.e., where the axes of the output light beams are parallel among themselves and parallel to the optical axis of the scan system.

Most optical beam scanners use tilting mirrors to deflect a light beam axis. The most common way to tilt mirrors is the use of a galvanometer, electric motor, piezoelectric or magneto-strictive actuators and micro-electrical mechanical system devices containing a small mirror that has controllable tilt in one or two dimensions. The cost of these optical scanners tends to increase as scanning speed increases, due to the increasingly complex requirement for precise control of the tilt degree of the mirror. Moreover, the above-mentioned scanners are to be used in conjunction with optical elements, such as lenses, to obtain a specific optical scanning paradigm. Once these optical components are chosen, there is limited flexibility for changing the scanning paradigm of such optical scanners.

For example, for telecentric beam shifting, some of the previous options require the pivot point of the input light beams (i.e., the intersection of the axes of the input light beams) to be at an exact distance from a principal plane of a telecentric lens assembly, the distance being equal to the focal length of the telecentric lens assembly. In such configuration, once the components are chosen and the distance between them is set, the scanning paradigm is fixed, and the only flexibility left is the choice of the field of view, as determined by the mirror tilt angle, and the choice of scanning speed, as determined by the mirror tilt actuator mechanism. Alternatively, for more versatility, instead of tilting mirrors, scanning refractive optics, acousto-optic deflectors or electro-optic deflectors can be used, albeit at a much higher price tag.

More recently, the use of lenses with adjustable focal lengths, such as electrically tuneable liquid lenses, has been introduced in the field of optical beam scanning and control, with the goal of increasing versatility at a more contained cost. Literature and patent searches have revealed their use in beam steering and beam expanding, as reported in the following references.

Patent document WO 2018/097869 A2 discloses a wide-angle beam steering device which uses two or more variable focal length lenses. The device controls the exit angle of an output light beam.

Patent document US 2015/0055078 A1 discloses a variable beam expander which uses lenses having tuneable focal lengths, which aims at controlling the size of the output beam. The variable beam expander controls expansion of an output light beam without requiring rotation or sliding movement of its components. The variable beam expander keeps the output beam axis collinear with the input beam axis.

## DESCRIPTION OF THE INVENTION

The apparatus presented herein permits displacing an optical beam axis on at least one dimension minimizing disadvantages of similar apparatuses, the disadvantages being derived from a need to perform certain movements such as displacement, tilting or rotation of optical components, such as mirrors or lenses. Thereby, the apparatus presented herein provides robustness and versatility and can be implemented with relatively inexpensive components. In addition, the apparatus presented herein permits changing a direction of an optical beam axis, such that a light beam axis being parallel to a target direction can be obtained.

A first aspect of the invention relates to an apparatus for displacing an input light beam axis of an input light beam and/or changing a direction of the input light beam axis of the input light beam, comprising:

- a first lens having a focal length that is adjustable, the first lens comprising a front and a back principal plane and a front and a back principal point; the front principal point being at an offset from an intersection between the front principal plane of the first lens and a straight line comprising the input light beam axis;
- a second lens having a focal length that is adjustable; the second lens comprising a front and a back principal plane, a front nodal point and a back principal point; the second lens being arranged sequentially after the first lens (in the direction of the input light beam entering the apparatus), the front principal plane of the second lens being at a distance from the back principal plane of the first lens;
- means for adjusting the focal length of the first lens such that the focal length of the first lens sets an intersection point between:

- a first straight line having a target direction and passing through the front nodal point of the second lens, and
- a second straight line comprising a light beam axis of an intermediate light beam propagating from the first lens to the second lens and resulting from propagation of the input light beam axis through the first lens;

- means for adjusting the focal length of the second lens such that the focal length of the second lens equals a distance between the front principal plane of the second lens and the intersection point;

wherein a direction of a displaced and/or deflected light beam axis outputted from the second lens is parallel (or essentially parallel) to the target direction; the displaced and/or deflected light beam axis resulting from propagation of the input light beam axis through the first lens and subsequently through the second lens.

In the above apparatus, the front principal plane of the second lens and the back principal plane of the first lens can be parallel or essentially parallel.

In the context of the present disclosure, the front principal plane of the first lens is to be understood as a principal plane of the first lens including an intersection between a straight line comprising the input light beam and a straight line comprising an axis of a light beam being outputted from the first lens and resulting from propagation of the input light beam through the first lens, wherein the straight line comprising the axis of the light beam outputted from the first lens is parallel to the optical axis of the first lens.

In the context of the present disclosure, the back principal plane of the first lens is to be understood as a principal plane of the first lens including an intersection between a straight line comprising the input light beam and a straight line comprising an axis of a light beam being outputted from the first lens and resulting from propagation of the input light beam through the first lens, wherein the straight line comprising the axis of the input light beam is parallel to the optical axis of the first lens.

In the context of the present disclosure, the front principal plane of the second lens is to be understood as a principal plane of the second lens including an intersection between a straight line comprising an axis of a light beam resulting from propagation of the input light beam through the first lens and a straight line comprising an axis of a light beam being outputted from the second lens and resulting from propagation of the input light beam through the first lens and through the second lens, wherein the straight line comprising the axis of the light beam outputted from the second lens is parallel to the optical axis of the second lens.

In the context of the present disclosure, the back principal plane of the second lens is to be understood as a principal plane of the second lens including an intersection between a straight line comprising an axis of a light beam resulting from propagation of the input light beam through the first lens and a straight line comprising an axis of a light beam being outputted from the second lens and resulting from propagation of the input light beam through the first lens and through the second lens, wherein the straight line comprising the axis of the light beam resulting from propagation of the input light beam through the first lens is parallel to the optical axis of the second lens.

In the context of the present disclosure, the front principal point of the first lens (respectively, the second lens) is defined as an intersection of an optical axis of the first lens (respectively, the second lens) with the front principal plane of the first lens (respectively, the second lens).

In the context of the present disclosure, the back principal point of the first lens is defined as an intersection of an optical axis of the first lens with the back principal plane of the first lens.

In the context of the present disclosure, the front nodal point of the second lens is defined as a nodal point of the second lens being the intersection of a straight line, comprising the axis of an intermediate light beam resulting from propagation of the input light beam through the first lens, and the optical axis of the second lens, such that the propagation of the intermediate light beam through the second lens results in a light beam outputted from the second lens having a direction parallel to that of the intermediate light beam axis.

Unless indicated otherwise, the focal length refers to the effective focal length.

In the context of the present disclosure, a conjugate focal plane P' of a given plane P, is the plane P' such that points on P are imaged via an optical system on P', and vice versa.

In the context of the present disclosure, the displacement of a light beam axis is defined along a straight line comprising the front principal point of the first lens and a point of incidence of the input beam axis on the front principal plane of the first lens.

The displaced and/or deflected light beam axis is displaced with respect to the input light beam axis at the front principal plane by a target displacement which is equal to a distance between:

- the intersection between the front principal plane of the first lens with the straight line comprising the input light beam axis; and
- the intersection between the front principal plane of the first lens and a line comprising the axis of the displaced and/or deflected light beam being outputted from the second lens and resulting from propagation of the input light beam through the first lens and through the second lens, whereby the line is straight when discarding the spaces between front and back principal planes of both the first and second lens.

In the context of the present disclosure, the target direction is a straight line comprising the front nodal point of the second lens at a desired angle with respect to the optical axis of the second lens. The axis of the displaced and/or deflected light beam outputted from the second lens and resulting from propagation of the input light beam through the first and subsequently the second lens is parallel to the target direction.

In the context of the present disclosure, adjusting a beam axis direction is defined as the action of setting the target direction such that an angle between a straight line comprising the input beam axis and the target direction is non-zero.

The displaced and/or deflected light beam axis is deflected with respect to the beam axis of the input light beam by a target deflection angle when the focal length of the second lens is set to a distance between the front principal plane of the second lens and the intersection between:

- a straight line passing through the front nodal point of the second lens and having the target direction, and
- a straight line comprising the axis of the intermediate light beam propagating from the first lens to the second lens resulting from propagation of the input beam through the first lens.

In the context of the present disclosure, a paraxial condition means that an angle $\theta$ between a light beam axis and an optical axis of a lens in the optical system is small enough to allow the approximation: $\tan\theta \cong \sin\theta \cong \theta$, for example $\theta \leq 10°$.

In paraxial conditions, and wherein the optical axis of the first and second lens are collinear, adjusting the focal length of the first and second lens as explained below enables varying the target displacement of a light beam axis, as follows:

$$\Delta \cong d\left(\alpha - \frac{h_{in}}{f_1}\right)$$

And it also enables changing the direction of a light beam axis by a target deflection angle, as follows

$$\alpha = \theta_{in} - \theta_{out} \cong \frac{d}{f_2} + h_{in}\left(\frac{1}{f_2} + \frac{1}{f_1}\left(1 - \frac{d}{f_2}\right)\right)$$

wherein:

$\Delta$ is a target displacement, being an offset between two points on the front principal plane of the first lens, the first point being the intersection between the front principal plane of the first lens and a straight line comprising the input light beam axis, and the second point being an intersection between the front principal plane of the first lens and a line comprising the axis of the displaced and/or deflected light beam outputted from the second lens and resulting from propagation of the input light beam through the first lens and through the second lens, whereby the line is straight when discarding the spaces between front and back principal planes of both the first and second lens, and

$\alpha$ is a target deflection angle formed between the target direction and a straight line comprising the input light beam axis; and

d is a distance between the back principal plane of the first lens and the front principal plane of the second lens; and

$h_{in}$ is an offset between the front principal point of the first lens and the intersection between the front principal plane of the first lens and the straight line comprising the input light beam axis; and

$\theta_{in}$ is an angle formed between the optical axis of the first lens and the straight line comprising the axis of the input light beam; and

$\theta_{out}$ is an angle formed between the target direction and the optical axis of the second lens; and

$f_1$ is a focal length of the first lens; and

$f_2$ is a focal length of the second lens.

In the context of the present disclosure, the sign of the angles is considered as follows:

$\alpha$ is considered positive if the shortest rotation of the straight line comprising the input light beam axis towards the target direction happens in a clockwise direction, and negative if the shortest rotation happens in a counterclockwise direction.

$\theta_{in}$ is considered positive if the shortest rotation of the straight line comprising the input light beam axis towards the optical axis of the first lens happens in a clockwise direction, and negative if the shortest rotation happens in a counterclockwise direction.

$\theta_{out}$ is considered positive if the shortest rotation of the straight line comprising the output light beam axis towards the optical axis of the second lens happens in a clockwise direction, and negative if the shortest rotation happens in a counterclockwise direction.

In the context of the present disclosure, the sign of the focal length of any of the lenses of the present invention is considered positive if the lens is a converging lens, and negative if the lens is a diverging lens.

To achieve a target output displacement $\Delta$ and a target output deflection angle $\alpha$ in paraxial conditions and wherein the optical axis of the first and second lenses are collinear, the focal length of the first lens is to be set as:

$$f_1 = \frac{dh_{in}}{d\alpha - \Delta}$$

And the focal length of the second lens is to be set as:

$$f_2 = \frac{d\big(\Delta + h_{in} + d(\theta_{in} - \alpha)\big)}{\Delta}$$

In some embodiments, the first lens is arranged for interacting with an input light beam having a beam axis offset from the optical axis of the first lens, and the second lens is arranged sequentially after the first lens for subsequent interaction with the light beam. Since the input light beam axis is offset from the optical axis of the first lens, the input light beam axis does not propagate through the front principal point of the first lens.

Adjusting the focal length of the first lens and the focal length of the second lens as explained above enables adjusting the displacement, $\Delta$, of a light beam axis and/or adjusting a beam axis direction, by an angle $\alpha$ from the input beam axis direction, without requiring further actuation such as displacement, tilting or rotation of other optical components such as mirrors or additional lenses. With this level of flexibility, an optical beam scanner, capable, for example, of beam steering or of beam shifting, is disclosed. Therefore, this technology can be advantageously used in, for example, laser scanners for biomedical applications, including ophthalmology.

In some embodiments, the input light beam axis is parallel to the optical axis of the first and second lens. In such case, the above equations to achieve a target output displacement $\Delta$ and a target output deflection angle $\alpha$ in paraxial conditions and wherein the optical axis of the first and second lenses are collinear, reduce to the following ones. The focal length of the first lens is to be set as:

$$f_1 = \frac{dh_{in}}{d\alpha - \Delta}$$

And the focal length of the second lens is to be set as:

$$f_2 = \frac{d(\Delta + h_{in} - d\alpha)}{\Delta}$$

In those embodiments, whereby the input light beam axis is parallel to the optical axis of the first and second lenses and the target direction of the displaced light beam is also parallel to the optical axis of the first and second lens, i.e., the desired target output deflection angle $\alpha$ is zero, the above-mentioned equation further reduce to the following ones. The focal length of the first lens is to be set as:

$$f_1 = -\frac{dh_{in}}{\Delta}$$

And the focal length of the second lens is to be set as:

$$f_2 = d - f_1$$

Therefore, in such cases, the means for adjusting the focal length of the first and the second lens are configured to keep a sum of the focal length of the first lens and second lens equal to the distance between the back principal plane of the first lens and the front principal plane of the second lens. These embodiments enable a relatively easy control of the focal lengths of the lenses for achieving the adjusted displacement of the light beam since the control merely requires keeping the sum of the focal lengths constant, within the tolerances on the shift in principle planes that might occur when adjusting the focal lengths of real electrically tuneable lenses.

In some embodiments the distance between the first lens and the second lens is kept constant. In some embodiments the distance between the first lens and the second lens can vary as a result of adjusting the focal lengths of the first and/or second lenses, and a consequent variation of the position of the principal plane of the first and second lenses.

In some embodiments, the apparatus comprises a third lens having a focal length that is adjustable for controlling a degree of focusing of a displaced and/or deflected light beam (i.e., the light beam comprising the displaced and/or deflected beam axis), the third lens comprising a back principal plane. In some embodiments, the third lens is arranged sequentially before the first lens, the back principal plane of the third lens being at a distance from the back principal plane of the first lens; and the apparatus comprises means for adjusting the focal length of the third lens such that the input light beam propagating from the third lens to the first lens resulting from a light beam propagating through the third lens would focus on an image plane, either virtual or real, being a conjugate focal plane of another plane, generated by the rest of the apparatus following the third lens.

The third lens enables adjusting a focusing distance of the displaced and/or deflected light beam. Thereby, the displaced and/or deflected light beam may be focused on a plane (i.e., the plane comprising a beam waist of the displaced and/or deflected light beam), that is the image of the input beam waist, imaged by the apparatus following the third lens. The image is at an adjustable distance from the second lens. This distance depends on the distance of the input beam waist from the first lens, and other parameters of the apparatus. The distance of the input beam waist from the first lens is controlled through adjusting the focal length of the third lens. For obtaining a collimated displaced and/or deflected light beam, the distance of the image of the input beam waist from the second lens, generated by the rest of the apparatus following the third lens, is theoretically set to infinity. Note that in practice, the theoretically infinite distance sometimes is not required for obtaining a displaced and/or deflected light beam being sufficiently collimated: a sufficiently long distance may be enough for a particular application. With this added level of flexibility, a comprehensive optical beam scanner, capable, for example, of beam steering and/or of beam shifting and/or tuning the focus distance, is disclosed.

In some embodiments, the third lens optical axis is parallel or collinear, or made collinear after a mirror reflection, to the first lens optical axis. The parallelism or collinearity of the optical axis enables higher simplicity of the arrangement of the lenses within the apparatus.

In paraxial conditions, and wherein the optical axis of the third lens is collinear with the input beam axis, and they are parallel to the optical axis of the first and second lenses, the condition for achieving a target focusing distance involves setting the focal length of the third lens to:

$$f_3 = d_3 + \frac{df_1(f_2 - d_i) + f_1 f_2 d_i}{(f_1 - d)(f_2 - d_i) - f_2 d_i}$$

wherein:

$f_1$ is the focal length of the first lens; and
$f_2$ is the focal length of the second lens; and
$f_3$ is the focal length of the third lens; and
$d$ is the distance between the back principal plane of the first lens and the front principal plane of the second lens; and
$d_i$ is the distance between the back principal plane of the second lens and the target focusing plane located sequentially after propagation through the second lens.

In some embodiments, the first lens is an electrically tuneable lens and/or the second lens is an electrically tuneable lens and/or the third lens is an electrically tuneable lens. The use of electrically tuneable lenses is advantageous because they are relatively cheap and enable a quick adjustment of their optical power, i.e., the inverse of their focal lengths, with high accuracy.

In some embodiments, the apparatus comprises means for receiving a collimated input light beam. Thereby providing a collimated light beam to the first lens or to the third lens, if present, or a lens (with a fixed focal length) before the third lens. For best control, in certain embodiments the focus of the third lens is adjusted when receiving a collimated beam.

In some embodiments, the apparatus comprises an adjustable beam expander arranged sequentially before the first lens and the second lens. In this way the apparatus not only allows adjusting the displacement and/or direction of a light beam axis but also allows controlling an expansion or reduction of a size of the displaced and/or deflected light beam. In some embodiments, the adjustable beam expander is configured to keep the size of the displaced and/or deflected light beam constant for several combinations of values of the focal lengths of the first lens and the second lens. In some embodiments, the apparatus is configured to keep constant the distance between the second lens and the target focussing plane comprising the beam waist of the displaced and/or deflected light beam. With this added level of flexibility, a comprehensive optical beam scanner, capable, for example, of beam steering or of beam shifting and/or tuning the focus distance and/or the beam waist diameter, is disclosed.

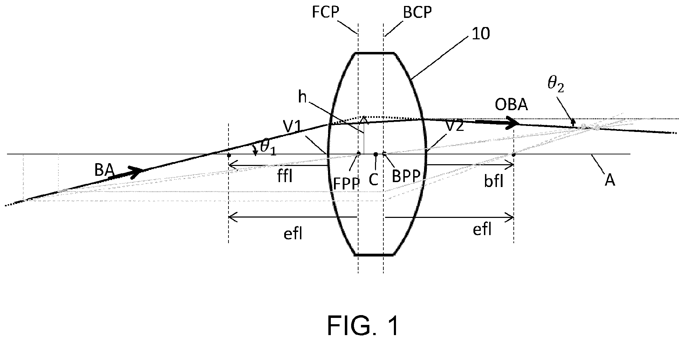

In general, displacement and/or deflection of light beam axes caused by the apparatus of the invention recited in claim 1 inherently causes a magnification, in other words a change in the beam size of the displaced and/or deflected light beam. The size change depends on the magnitude of the displacement and/or deflection angle. For example, in the case illustrated in figure 1D, the following mathematical formula explains the size change:

$$M_1 = \frac{f2D}{f1D}$$

wherein:

$M_1$ is an absolute value of a magnification generated by the apparatus as illustrated in figure 1D;
f1D is the focal length of the first lens;
f2D is the focal length of the second lens.

To enable keeping the size of the displaced and/or deflected light beam constant, the apparatus may comprise an adjustable beam expander, and in some embodiments, a beam expander configured to adjust a beam magnification when adjusting the focal length of the first lens and/or the focal length of the second lens.

In this manner, the beam expander could be configured to cause a magnification which is the inverse of the afore-calculated magnification, that is:

$$M_2 = \frac{1}{M_1}$$

wherein:

$M_1$ is the magnification generated by the apparatus illustrated in figure 1D;
$M_2$ is the magnification generated by the beam expander.

In some embodiments, the adjustable beam expander comprises a first additional lens comprising a back principal plane, and a second additional lens comprising a front principal plane; the first additional lens being arranged sequentially before the second additional lens, the back principal plane of the first additional lens being at a distance from the front principal plane of the second additional lens equal to a multiple m of the distance between the first and second lens; the first additional lens having a focal length that is adjustable and equal to that multiple m of the focal length of the second lens; the second additional lens having a focal length that is adjustable and equal to that multiple m of the focal length of the first lens; wherein a sum of the focal length of the first additional lens and the focal length of the second additional lens equals the distance between the back principal plane of the first additional lens and the front principal plane of the second additional lens. These embodiments facilitate adjusting the beam size of the displaced and/or deflected light beam, and keeping it constant. In some embodiments wherein the beam inputted to the adjustable beam expander is collimated and the input beam incident on the first lens is also collimated, for every combination of values of the focal length of the first and second lens the beam size can be kept constant by means of a mathematically simple adjustment of the focal lengths of the first and second additional lenses.

In some embodiments the distance between the first additional lens and the second additional lens is kept constant. In some embodiments the distance between the first additional lens and the second additional lens can vary as a result of adjusting the focal lengths of the first and/or second additional lenses and a consequent variation of the position of the principal plane of the first and second additional lenses.

In some embodiments, the adjustable beam expander comprises the first lens and the second lens, the first lens being arranged sequentially after the second lens; the apparatus comprising means for redirecting a light beam axis outputted from the first lens back to the first lens, preferably parallelly to the light beam axis outputted from the first lens, and at an offset from an intersection between the back principal plane of the first lens and a straight line comprising the light beam axis outputted from the first lens. In some embodiments, the means for redirecting comprise a hollow-roof mirror retroreflector, called from now on hollow-roof mirror for simplicity. In other words, redirection by the redirecting means causes a redirected light beam axis, wherein a straight line comprising the redirected light beam axis intersects the front principal plane of the first lens at an offset from the intersection between the front principal plane of the first lens and the straight line comprising the light beam axis outputted from the first lens.

These embodiments are advantageous because the same lenses used for causing the beam axis displacement and/or deflection are reused for controlling the size of the displaced and/or deflected light beam, enabling decreasing the number of optical components required in the apparatus and hence the size and cost of the apparatus. In these embodiments, the adjustable beam expander relies on the light beam propagating through the second lens and subsequently through the first lens to compensate the beam size change caused by the subsequent propagation of the light beam through the first lens and then through the second lens.

The adjustable beam expander is preferably arranged sequentially after the third lens, although in other embodiments, the adjustable beam expander could be arranged sequentially before the third lens. In some embodiments, regardless of arrangement order of the adjustable beam expander and the third lens, an optical axis of the third lens and an optical axis of the adjustable beam expander are collinear, and, preferably, an optical axis of the third lens, an optical axis of the second lens and an optical axis of the first lens are also collinear. This configuration of the optical axes being collinear results in an optimal configuration for the actual implementation of the apparatus.

In certain embodiments the apparatus comprises means for redirecting (such as a mirror) an input light beam axis, preferably to be collinear to the optical axis of the adjustable beam expander, the means for redirecting the input light beam axis being arranged sequentially before the adjustable beam expander.

In some embodiments, the apparatus comprises means for moving the means for redirecting a light beam axis outputted from the first lens, preferably wherein the means for moving are means for rotating, about an optical axis of the first lens, the means for redirecting a light beam axis outputted from the first lens. Moving the means for redirecting a light beam enables displacing a light beam axis in an additional dimension. For example, in terms of polar coordinates, a mere adjustment of the focal length of the lenses may enable causing a displacement of a light beam axis in the radial dimension, whereas moving the means for redirecting causes a displacement of a light beam axis in the angular dimension.

In some embodiments, the apparatus comprises means for parallelly displacing by a constant distance the displaced and/or deflected light beam axis, the means for parallelly displacing by a constant distance the displaced and/or deflected beam axis being arranged sequentially after the second lens. In some embodiments, the means for parallelly displacing by a constant distance the displaced and/or deflected beam axis comprises two parallel mirrors arranged in a periscope configuration. The means for parallelly displacing by a constant distance the displaced and/or deflected beam axis allows light beam displacements which cannot be obtained without the means for parallelly displacing by a constant distance the displaced and/or deflected beam axis due to constraints in size and location of the optical components of the apparatus. In particular, the means for parallelly displacing by a constant distance the displaced and/or deflected beam axis advantageously allows displacing a light beam such that the light beam axis outputted from said means is collinear with the optical axis of the second lens. The skilled in the art understands that it would not be possible to obtain this collinearity merely with the components shown in figure 1C.

In some embodiments, the apparatus comprises means for synchronously moving:

- the means for parallelly displacing by a constant distance the displaced and/or deflected beam axis with
- a movement of the means for redirecting a light beam axis outputted from the first lens caused by the means for moving the means for beam redirection. Therefore, in some embodiments in which the means for beam redirection comprises a hollow-roof mirror, and the means for parallelly displacing by a constant distance the displaced and/or deflected beam axis comprises two parallel mirrors arranged in a periscope configuration, the hollow-roof mirror and the two parallel mirrors arranged in a periscope configuration are configured to synchronously rotate about the first and second lens collinear axes.

In some embodiments, the means for moving the means for parallelly displacing the displaced and/or deflected beam axis comprises a motor, for example an electric motor. In some embodiments, the means for moving the means for redirecting the light beam outputted from the first lens comprises a motor, for example an electric motor. In some embodiments, the means for moving the means for parallelly displacing the displaced and/or deflected beam axis and the means for moving the means for redirecting the light beam outputted from the first lens share a motor, for example an electric motor. Thereby, merely one motor is enough for providing the movement required by the means for moving the means for parallelly displacing the displaced and/or deflected beam axis and the means for moving the means for redirecting the output light beam from the first lens.

The synchronous movement enables moving the means for parallelly displacing the displaced and/or deflected beam axis at the same time as the means for beam redirection such that the relative position and orientation of the means for parallelly displacing the displaced and/or deflected beam axis with respect to the position and orientation of the means for beam redirection remain constant. This facilitates the control of the displacement magnitude of the displaced beam axes. These embodiments are particularly advantageous if the means for moving the means for parallelly displacing a light beam and the means for moving the means for redirecting a light beam share a motor because it is easier and more cost-effective to provide a synchronous movement through the use of a single motor than through the use of several motors.

In some embodiments, a transmission system is required for continuous operation of the single shared motor to synchronously move the means for parallelly displacing the displaced and/or deflected beam axis by a constant distance and the means for redirecting a light beam axis outputted from the first lens. This is particularly advantageous in those cases in which the first and/or the second lens is/are attached to a component which movement may be disadvantageous for the apparatus, such as a wire for supplying electrical power to the first and/or second lens respectively.

In some embodiments, the apparatus comprises:

- means for redirecting a light beam axis along the optical axis of the first and second lenses, such as a plate having a front mirror face and a back mirror face, the front mirror face being arranged sequentially before the adjustable beam expander;
- means for redirecting outside the aperture of a lens (i.e., without back-propagation through a lens) a light beam outputted from the second lens to the first lens and for redirecting a light beam outputted from the first lens to the second lens;
- means for redirecting the displaced and/or deflected light beam axis from the second lens to the back mirror face of the plate;
- a rotatable shaft mechanically connected to:

  • the means for redirecting a light beam axis outputted from the first lens back to the first lens, and to
  • the means for redirecting the displaced and/or deflected light beam axis from the second lens to the back mirror face of the plate.

A second aspect of the invention relates to a method for displacing an input light beam axis of an input light beam and/or changing a direction of the input light beam axis of the input light beam, the method comprising steps of:

- the input light beam propagating through a first lens and the resulting intermediate light beam subsequently propagating through a second lens, the first lens comprising a front principal point at an offset from an intersection between the front principal plane of the first lens and a straight line comprising the input light beam axis; the second lens comprising a front principal plane of the second lens being arranged at a distance from the back principal plane of the first lens;
- adjusting a focal length of the first lens such that the focal length of the first lens sets an intersection point between two straight lines:

  - a first straight line having a target direction and passing through the front nodal point of the second lens, and
  - a second straight line comprising a light beam axis of an intermediate light beam propagating from the first lens to the second lens and resulting from propagation of the input light beam through the first lens;

- adjusting the focal length of the second lens such that the focal length of the second lens equals a distance between the front principal plane of the second lens and the intersection point; wherein a direction of a displaced and/or deflected light beam axis of a light beam outputted from the second lens is parallel to the target direction.

Thereby, adjusting the focal length of the first lens and the focal length of the second lens enables displacing and/or deflecting a light beam axis without requiring further actuation such as displacement, tilting or rotation of other optical components such as mirrors or additional lenses. In addition, the apparatus enables more displacement and/or deflection versatility than other apparatuses known in the art for displacing or deflecting an input light beam axis.

In some embodiments, the method comprises adjusting a degree of focusing of a displaced and/or deflected light beam through:

- a light beam propagating through a third lens; wherein the step of the light beam propagating through the third lens is performed prior to the step of the input light beam propagating through the first lens comprising the front principal point at an offset from an intersection between the front principal plane of the first lens and a straight line comprising the input light beam axis; and
- adjusting a focal length of the third lens such that the input light beam propagating from the third lens to the first lens resulting from the light beam propagating through the third lens would focus on an image plane being a conjugate focal plane of another plane, generated by the rest of the apparatus following the third lens and arranged sequentially after the second lens at a distance from the back principal point of the second lens.

This method enables adjusting the position of the focus of the displaced and/or deflected light beam, such that the displaced and/or deflected light beam can be made convergent on targets located at different distances.

In some embodiments, the method comprises a step of expanding or reducing a light beam size performed prior to the step of the input light beam propagating through the first lens, with the input light beam axis being at an offset from an intersection between the front principal plane of the first lens and a straight line comprising the input light beam axis; wherein an expansion or reduction factor of the light beam size is adjusted when adjusting the focal length of the first lens and/or the focal length of the second lens such that a beam size of the displaced and/or deflected light beam axis is adjusted.

In some embodiments, the step of expanding or reducing a light beam size comprises performing the following steps prior to the step of the input light beam propagating through the first lens:

- obtaining the input light beam from propagation of a light beam through the second lens and, subsequently, through the first lens; and, in some embodiments, also from
- redirecting, preferably parallelly, the magnified light beam after the propagation through the first lens at an offset to the front principal point of the first lens.

These embodiments allow compensating the beam magnification generated in the steps of the light beam propagating through the first lens, and subsequently propagating through the second lens, by means of a mere reuse of the first and second lens. In some embodiments, the beam axis of the light beam propagating through the beam expander and the optical axis of the first and second lenses are collinear. This feature facilitates control of the apparatus since changing the focal length of the first and/or second lens result in changing the size of the light beam outputted by the beam expander without changing the direction of the light beam outputted by the beam expander.

In certain embodiments the step of expanding or reducing a light beam size is performed by a beam expander as previously defined in respect of the first aspect.

In some embodiments, the method of the second aspect is performed by the apparatus of the first aspect of the invention.

The different aspects and embodiments of the invention defined in the foregoing can be combined with one another, as long as they are compatible with each other.

Additional advantages and features of the invention will become apparent from the detailed description that follows and will be particularly pointed out in the appended claims.

**BRIEF DESCRIPTION OF THE DRAWINGS**

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:

Figure 1 schematically illustrates geometric parameters of a lens and ray propagation through the lens.

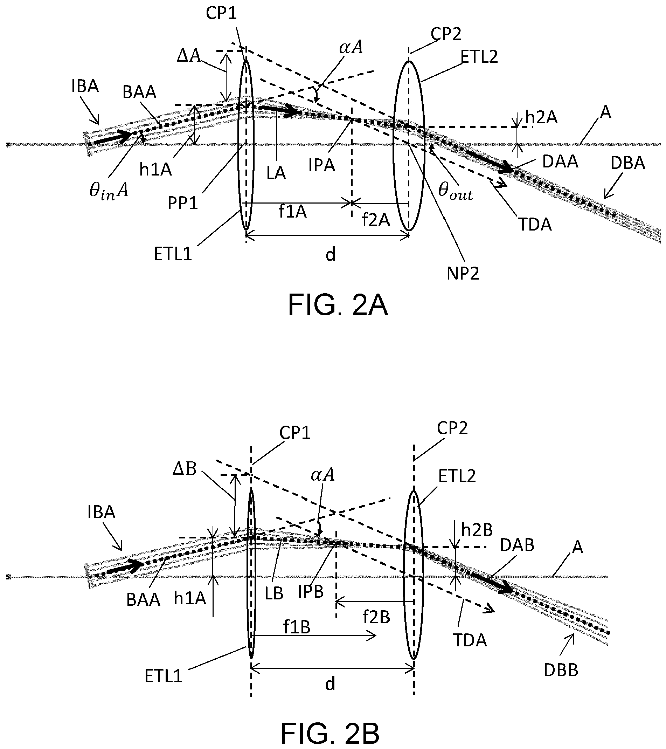

Figure 2A schematically shows an embodiment of an apparatus according to the present invention, wherein the optical axis of the first and second lens are collinear, the target displacement is set as the quantity $\Delta A$, and the target direction is set to be different to the input beam axis direction, as defined by a target deflection angle $\alpha A$ between a straight line comprising the light beam axis inputted to the first lens and a straight line comprising the target direction. The input beam axis and the optical axis of the first lens are not parallel.

Figure 2B schematically shows the embodiment of figure 2A, wherein the target displacement $\Delta B$ is set to a magnitude larger than in Figure 2A, but the target direction is the same as in figure 2A. As a consequence, the focal lengths of the lenses are set differently from the focal lengths of figure 2A.

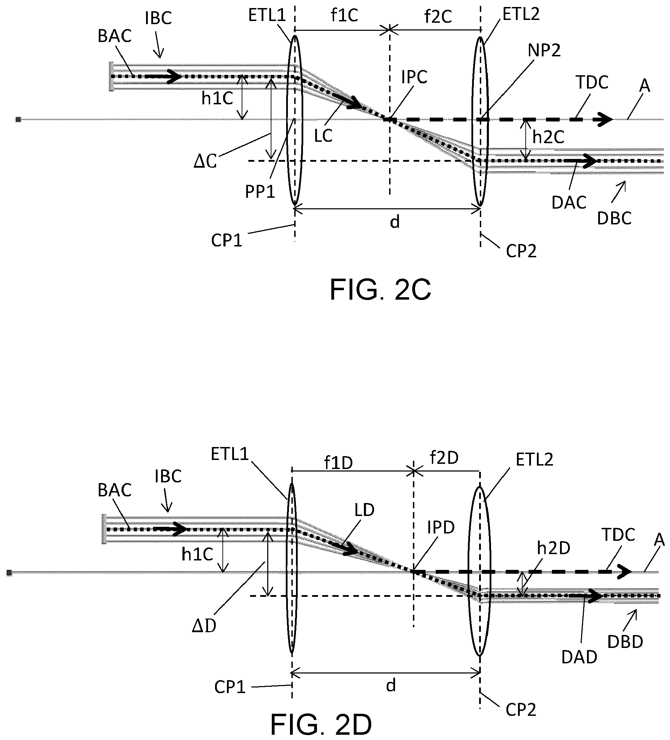

Figure 2C schematically shows the embodiment of figure 2A, but with a different target displacement and a different target direction to that of figure 2A and figure 2B, wherein the latter is set parallel to the optical axis of the second lens and wherein the input beam axis and the optical axis of the first lens are parallel, and therefore no beam deflection is desired. As a consequence, the focal lengths of the lenses are set differently from the focal lengths of figure 2A and 2B.

Figure 2D schematically shows the embodiment of figure 2A, wherein the input beam axis and the optical axis of the first lens are parallel as in figure 2C, and with the same target direction as in figure 2C but with a smaller target displacement to that of figure 2C. As a consequence, the focal lengths of the lenses are set differently from the focal lengths of figure 2A, 2B and 2C.

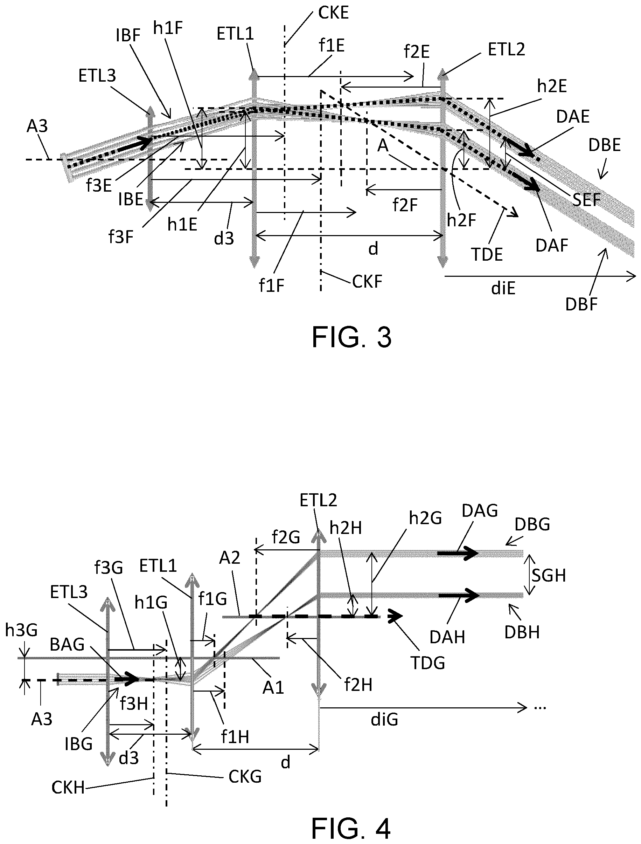

Figure 3 schematically shows an embodiment of an apparatus according to the present invention, wherein the optical axis of the first and second lens are collinear and parallel to the optical axis of the third, the input beam axis direction and the target direction are different and not parallel to the optical axis of the first lens. Figure 3 schematically shows two different displacements of a light beam axis in a beam shifting paradigm, the displacement resulting from an adjustment of the focal lengths of the lenses, including the third lens to keep output collimation.

Figure 4 schematically shows an embodiment of an apparatus according to the present invention wherein the optical axis of the first, second and third lenses are parallel among themselves but no two are collinear, and the input beam axis and the optical axis of the third lens are collinear. Figure 4 schematically shows two different displacements of a light beam axis, in a beam shifting paradigm, the displacement resulting from an adjustment of the focal lengths of the lenses, including the third lens to keep output collimation.

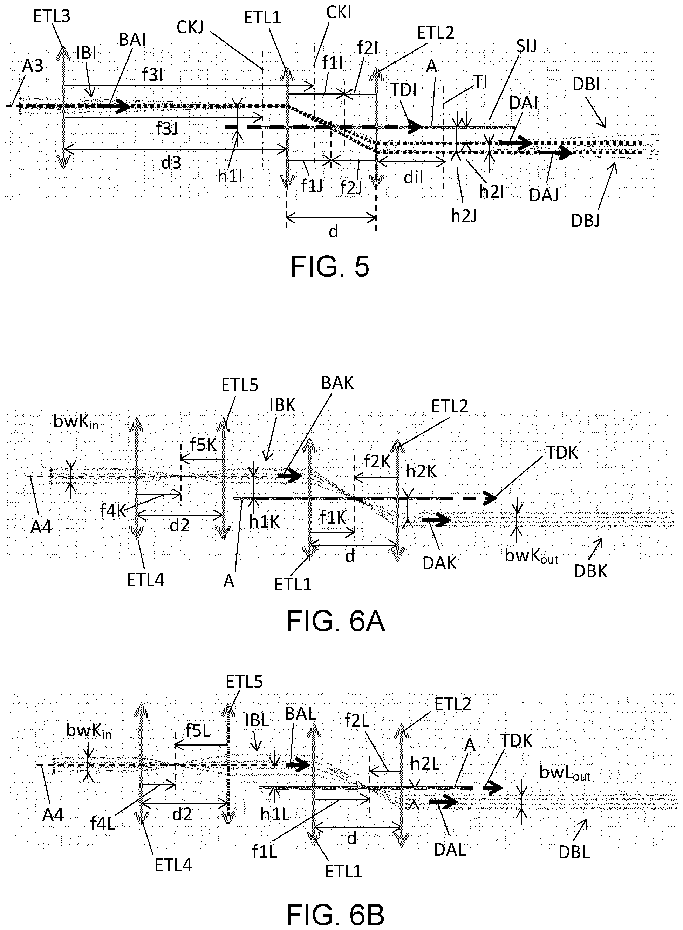

Figure 5 schematically shows an embodiment of an apparatus according to the present invention, wherein the optical axes of the first and second lenses are collinear, and parallel to the optical axis of the third lens. The input beam axis and the optical axis of the third lens are collinear. Figure 5 schematically shows two different displacements of a light beam axis, in a beam shifting paradigm, the displacement resulting from an adjustment of the focal lengths of the lenses, including the third lens to adjust the output focusing distance and keep it on a target plane at the same distance from the second lens.

Figure 6A schematically shows an embodiment of an apparatus according to the present invention, wherein an adjustable beam expander comprising a first and second additional lens is arranged sequentially before the first and second lenses. The optical axes of the first and second lens are collinear and parallel to the optical axes of the first and second additional lens, which are collinear between them. The focal lengths of the first and second lenses are set to produce a target beam axis displacement and no beam axis deflection. The focal length of the first and second additional lens are set to compensate the magnification of the collimated input light beam produced by propagation sequentially through the first and the second lens.

Figure 6B schematically shows the embodiment of figure 6A, wherein the focal lengths of the lenses are set differently from the focal lengths of figure 6A to produce a smaller target displacement than in figure 6A, no beam axis deflection and the same output beam size as in figure 6A.

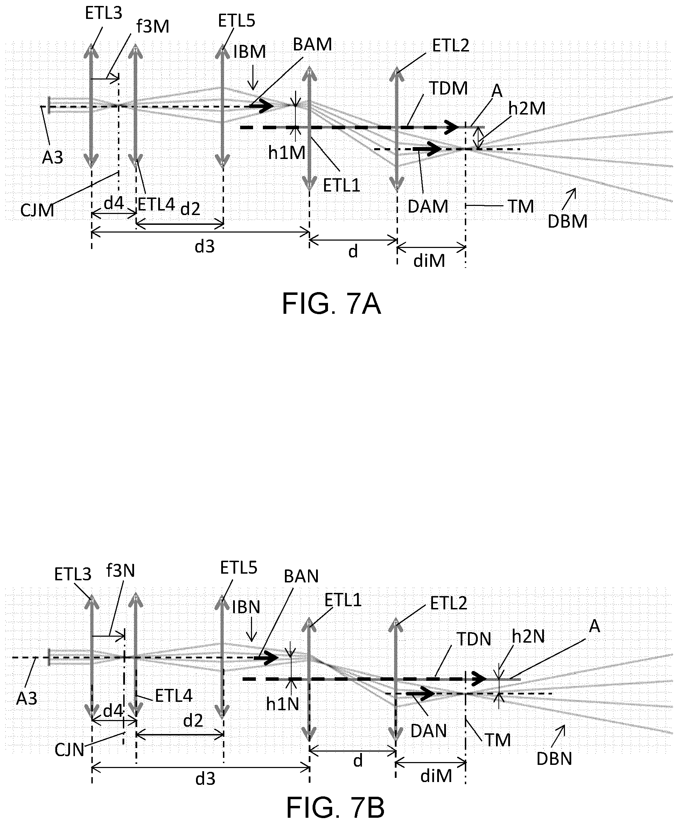

Figure 7A schematically shows an embodiment of an apparatus according to the present invention, similar to the embodiment of figure 6A and figure 6B, wherein a third lens for controlling the degree of focussing of the output light beam is arranged sequentially before an adjustable beam expander. The focal lengths of the lenses are set to produce a target beam axis displacement and no beam axis deflection and a beam waist on a target plane at a distance from the second lens.

Figure 7B schematically shows the embodiment of figure 7A, wherein the focal lengths of the lenses are set differently from the focal lengths of figure 7A to produce a smaller target displacement than in figure 7A and no beam axis deflection and a beam waist on the same target plane at the same distance from the second lens as in figure 7A.

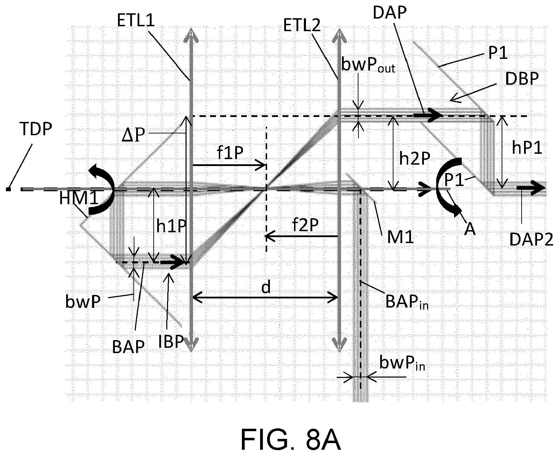

Figure 8A schematically shows an embodiment of an apparatus according to the present invention wherein an adjustable beam expansion is achieved by a light beam propagating through the second and first lenses, respectively in that order and collinearly with their optical axis, before redirection by a hollow-roof mirror and propagation back through the first lens at an offset from its optical axis and then through the second lens, before being parallelly displaced by a periscope to the physical rotation axis of the apparatus. The focal lengths of the first and second lenses are set to produce a target displacement, no beam axis deflection and no magnification of the light beam size inputted to the adjustable beam expander comprising the second and first lens.

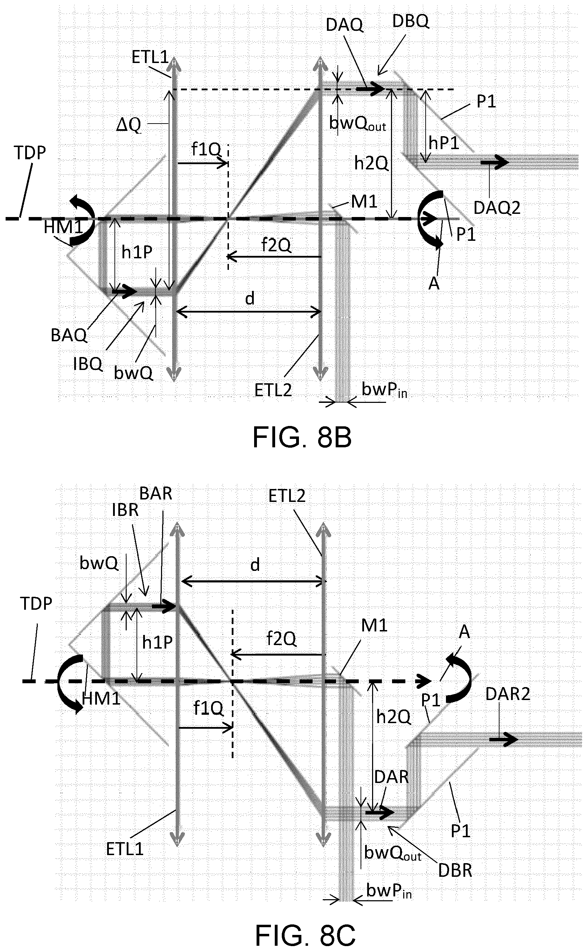

Figure 8B schematically shows the embodiment of figure 8A wherein the focal lengths of the lenses are set differently from the focal lengths of figure 8A to produce a larger target beam axis displacement than in figure 8A, no beam axis deflection and no magnification of the light beam size inputted to the adjustable beam expander.

Figure 8C schematically shows the embodiment of figure 8B after a synchronous rotation of equal magnitude of a hollow-roof mirror and of a periscope.

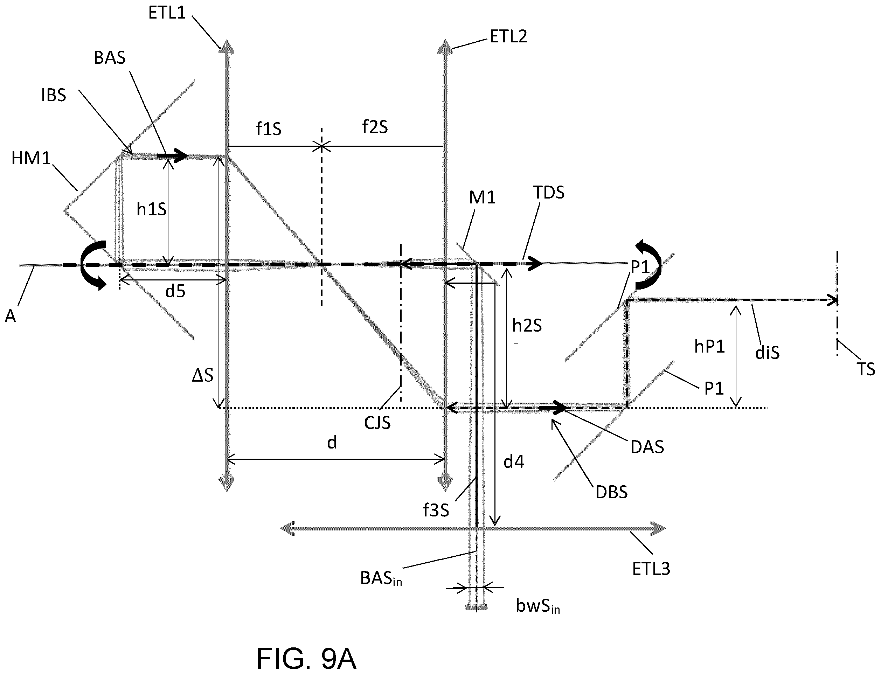

Figure 9A schematically shows an embodiment of an apparatus according to the present invention similar to the embodiment of figure 8A, with the addition of a third lens for controlling the focusing distance of the output beam from the second lens.

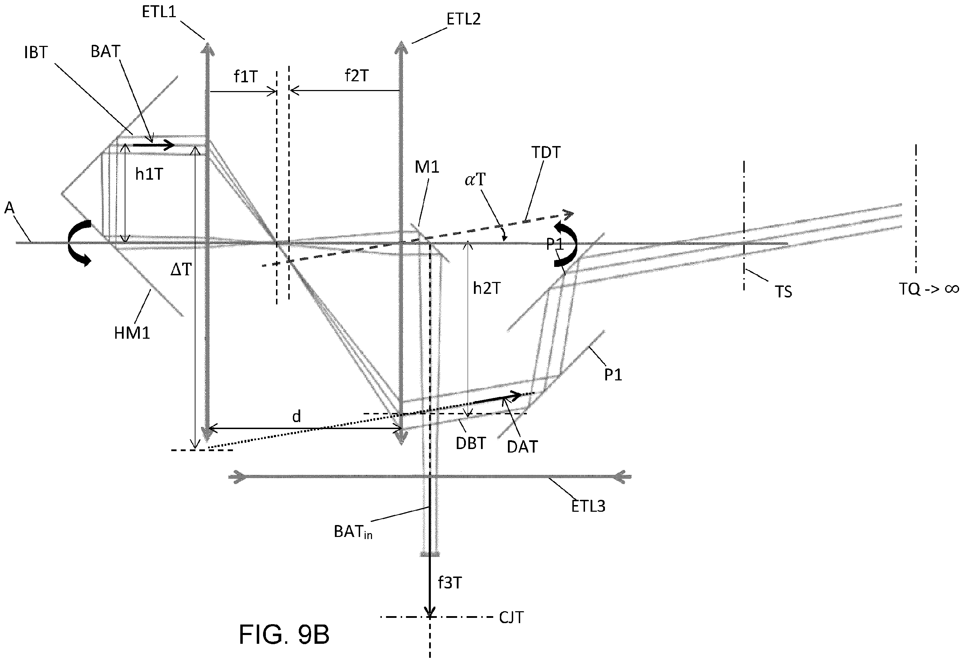

Figure 9B schematically shows the same embodiment as in figure 9A, wherein the third lens focal length is negative and set to obtain a collimated displaced light beam and the target direction is at an angle from the optical axis of the first and second lenses.

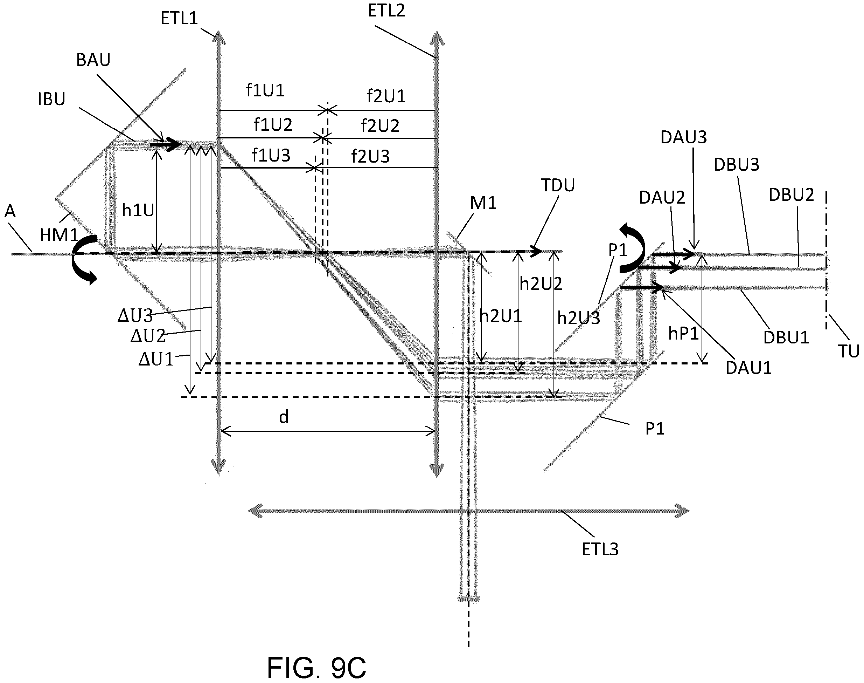

Figure 9C schematically shows the same embodiment as in figure 9A and three focal lengths combinations, leading to three parallelly displaced focussed light beams, whereby the target direction and the target plane, on which these beams are focussed, is the same as in figure 9A.

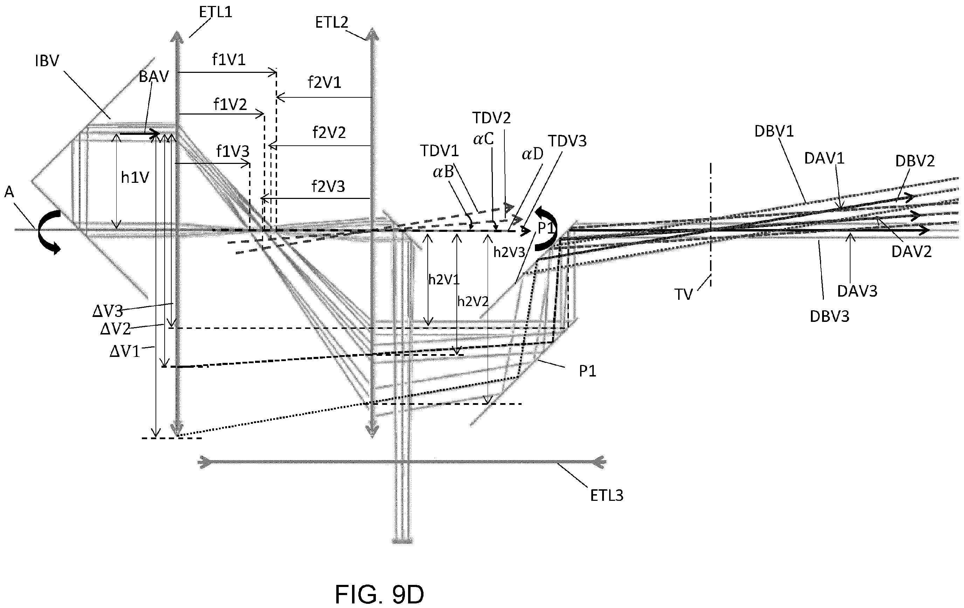

Figure 9D schematically shows the same embodiment as in figure 9B and three focal lengths combinations, different to those in figure 9C, leading to three displaced and deflected collimated light beams, whereby the target directions are such that the beam axes of each of the displaced beams, after propagation through the periscope, intersect at a constant pivot point located at the position of the target plane in figure 9C. The beam scanning paradigms of figure 9C and 9D show the versatility of the apparatus disclosed in this embodiment in producing both telecentric beam shifting and collimated beam steering about a constant pivot point, making the apparatus suitable for comprehensive eye scanning for optical coherence tomography or other beam scanning techniques.

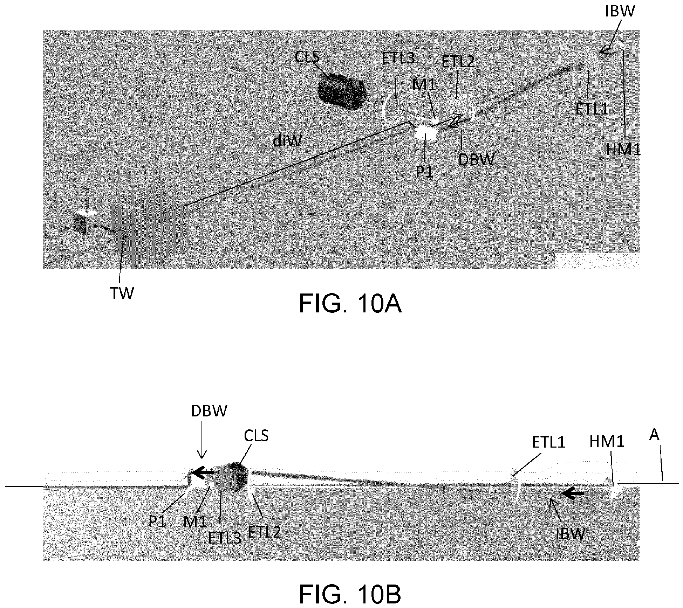

Figure 10A shows a perspective view of a 3D simulation of an embodiment of an apparatus according to the present invention similar to the embodiment of figure 9C.

Figure 10B shows a side view of the 3D simulation of the embodiment of figure 10A.

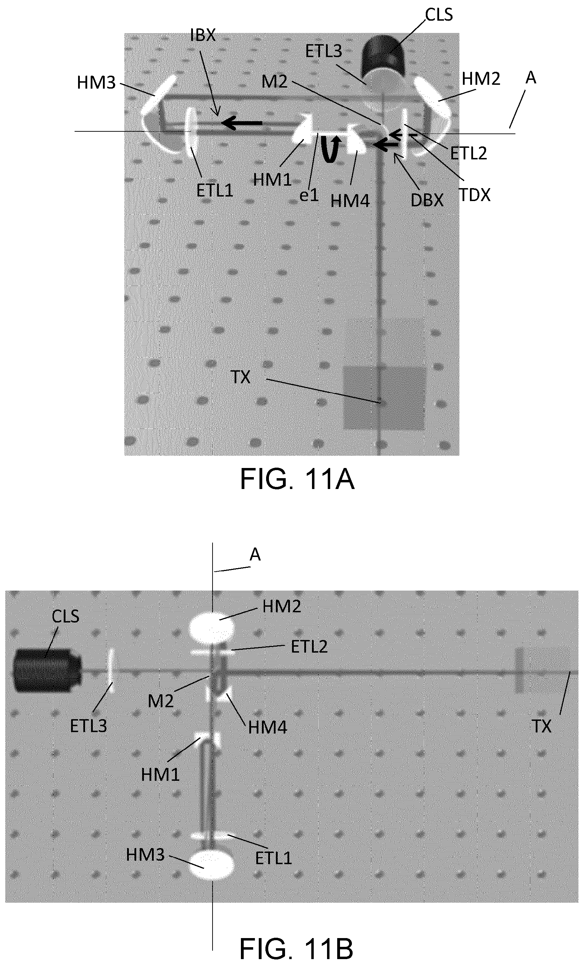

Figure 11A shows a side view of a 3D simulation of an embodiment of an apparatus according to the present invention, whereby merely one double shaft motor drives the motion of two hollow roof mirrors without the need for a system of mechanical transmission.

Figure 11B shows a top view of a 3D simulation of the embodiment of figure 11A.

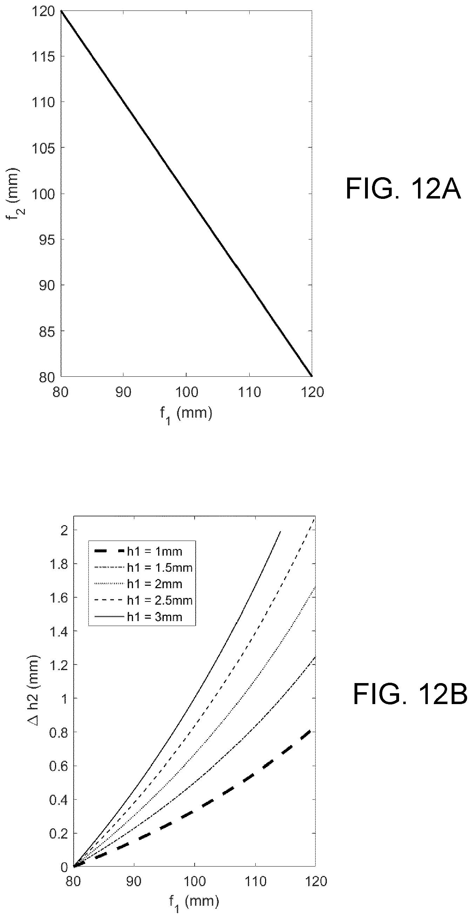

Figure 12A shows a relationship between a focal length of a first lens and a focal length of a second lens in the embodiment of figure 9, wherein the optical axis of the first and second lenses are assumed to be collinear and the input light beam axis is assumed to be parallel to the optical axis of the first lens, allowing to maintain the sum of the focal length of the first and the second lens constant and equal to the distance between the lenses.

Figure 12B shows a relationship between a focal length of a first lens and a variation of displacement of an input light beam axis for input light beam axes having different offsets with respect to the first lens optical axis, assuming an embodiment of the present invention equivalent to the embodiment assumed in figure 12A.

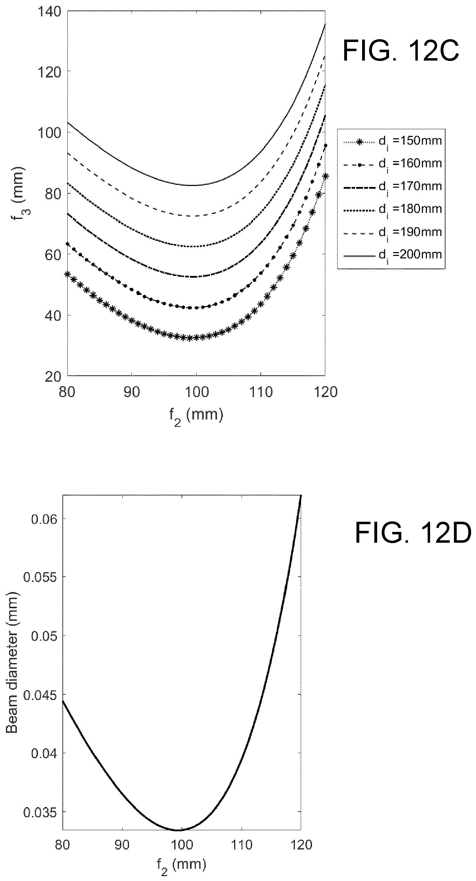

Figure 12C shows a relationship between a focal length of a third lens and a focal length of a second lens for achieving different distances between the second lens and a waist of the displaced light beam (i.e. for achieving different focus distances), assuming an embodiment of the present invention equivalent to the embodiment assumed in figure 12A and wherein the optical axis of the third and first lenses are assumed to be collinear.

Figure 12D shows a relationship between a focal length of the second lens and a diameter of a beam waist of a displaced light beam, assuming an embodiment of the present invention equivalent to the embodiment assumed in figure 12C.

## DETAILED DESCRIPTION OF EMBODIMENTS

The following description is not to be taken in a limiting sense but is given solely for the purpose of describing the broad principles of the invention. Embodiments of the invention will be described by way of example, with reference to the above-mentioned drawings.

For the sake of clarity of the features and components of the apparatus mentioned in the following description of the present invention a schematic representation of the important features of a thick lens for the comprehension of the propagation of an input light beam through a real lens is shown in figure 1.

In geometrical optics, the effective focal length efl of a thick lens 10 in air is calculated as a function of the refractive index of the lens medium, the central thickness of the lens and the radius of curvature of the surfaces of the lens. The effective focal length efl is the distance between the focal point and the corresponding principal plane of the lens, and it is equal at the front and back of the lens. The front focal length ffl and back focal length bfl are the distance between the vertex of the front V1 and back V2 of the lens to the front and back focal points on the lens optical axis A, respectively. Since the radius of curvature of each surface of the lens can be different, the front focal length ffl and the back focal length bfl can also be different from one another. When an input beam axis BA is incident on the lens, it can be characterized by the angle $\theta_1$ between the input beam axis BA and the optical axis A of the lens, and an offset h is defined as the distance between the lens front principal point FPP and the intersection of a straight line comprising the input beam axis BA and the lens front principal plane FCP. As shown in figure 1, a thick lens has two principal planes, the front FCP and the back BCP principal planes, and two principal points, the front FPP and the back BPP principal points, which are the intersection of the lens optical axis with the corresponding principal plane. As the principal planes are ideal planes at which refraction from an equivalent thin lens is thought to happen, the propagation of the beam axis between principal planes is parallel to the optical axis of the lens. So, the offset h between the front principal point FPP of the lens and the intersection of the front principal plane FCP of the lens with a straight line comprising the light beam axis BA incident on that lens, is the same offset h as the offset between the back principal point BPP of that lens and the intersection of the back principal plane BCP of that lens with a straight line comprising the light beam axis OBA outputted by that lens and resulting from a propagation of the light beam through that lens. In case of a lens in air, and when the curvature of the front and back surface of the lens is the same (i.e. for a bi convex or biconcave lens with equal surface curvature), the front and back principal planes coincide, and so the front and back principal points also coincide.

Figure 2A shows an apparatus for displacing an input light beam axis BAA and/or changing a direction of (i.e., deflecting) the input light beam axis BAA. The apparatus comprises a first electrically tuneable lens ETL1 having an adjustable focal length f1A, a second electrically tuneable lens ETL2 having an adjustable focal length f2A. The first lens ETL1 and the second lens ETL2 have a collinear optical axis A. The first lens ETL1 comprises a back principal plane CP1 perpendicular to the optical axis A, and the second lens ETL2 comprises a front principal plane CP2 perpendicular to the optical axis A. In the embodiment shown in this figure 2A (and the remaining figures, if applicable) the front principal plane coincides with the back principal plane in each electrically tuneable lens ETLi (where i = 1, 2, ..), and the labels CPi are used for both principal planes of a same lens ETLi. The same is true for the front and back principal points and the nodal point, which are labelled as PPi and NPi, which also coincide in this embodiment. The second lens ETL2 is arranged at a distance d from the first lens ETL1. In particular, the distance d between the first lens ETL1 and the second lens ETL2 extends from the back principal plane CP1 of the first lens ETL1 to the front principal plane CP2 of the second lens ETL2. The distance d is preferably constant.

An input light beam IBA is incident on the first lens ETL1 and subsequently propagates through the first lens ETL1. The input light beam IBA is collimated and has a beam axis BAA tilted with respect to the optical axis A of the first and second lens ETL1, ETL2. The input beam axis BAA is incident on the first lens ETL1 such that an intersection between a straight line comprising the input beam axis BAA and the front principal plane CP1 of the first lens ETL1 is at an offset h1A from the front principal point PP1.

The first lens ETL1 causes a change in the direction of the beam axis BAA of the input light beam IBA, thereby an intermediate light beam having a beam axis comprised by a straight line LA is outputted from the first lens ETL1. The beam axis LA of the intermediate light beam is tilted with respect to the optical axis A and with respect to the beam axis BAA of the input light beam IBA. The angle between the beam axis BAA of the input light beam IBA and the beam axis LA of the intermediate light beam depends, among other factors, on the focal length f1A of the first lens ETL1. The intermediate light beam propagates from the first lens ETL1 to the second lens ETL2, and it subsequently propagates through the second lens ETL2. The second lens ETL2 causes a change in the direction of the beam axis LA of the intermediate light beam inputted to the second lens ETL2, thereby a displaced and deflected light beam DBA having a deflected beam axis DAA is outputted from the second lens ETL2. The deflected beam axis DAA is parallel to a target direction TDA. As a result of the interaction between the input light beam IBA and the first and second lens ETL1, ETL2, a target displacement $\Delta A$ of a light beam axis and a target deflection $\alpha A$ of a light beam axis are obtained. In particular, a straight line comprising the deflected light beam axis DAA of the displaced and deflected light beam DBA intersects the back principal plane CP2 of the second lens ETL2 at an offset h2A from the back principal point NP2 of the second lens ETL2 and it also intersects the front principal plane CP1 of the first lens ETL1 at the

target displacement ∆A from the intersection between a straight line comprising the input beam axis BAA and the front principal plane CP1 of the first lens ETL1. As the target displacement ∆A is different from zero, a target displacement of the input light beam axis is produced. In addition, a change of direction of a light beam is produced because the direction of the beam axis BAA of the input light beam IBA is different from the direction of the deflected beam axis DAA of the displaced and deflected light beam DBA, by the deflection angle $\alpha$A.

The focal length f2A of the second lens ETL2 is equal to the distance between the front principal plane CP2 of the second lens ETL2 and an intersection point IPA between the straight line comprising the beam axis LA of the intermediate light beam and a straight line having the target direction TDA and passing through a front nodal point NP2 of the second lens ETL2. Setting the focal length f2A of the second lens ETL2 to this value causes the deflected beam axis DAA to be parallel to the target direction TDA. Thereby, the deflection and/or displacement of the deflected beam axis DAA within a plane defined by the input light beam axis BAA and the optical axis A is controllable by adjusting the focal lengths f1A, f2A of the first and second lens ETL1, ETL2.

In figures 2A, 2B, 2C and 2D the first lens ETL1 and the second lens ETL2 have the same optical axis A (i.e., their optical axes are collinear) and the distance d between the first lens ETL1 and the second lens ETL2 is the same. Since the optical axis A of the first lens ETL1 is the same as the optical axis A of the second lens ETL2, the back principal plane CP1 of the first lens ETL1 is parallel to the front principal plane CP2 of the second lens ETL2. Unless otherwise stated, in the present disclosure, a distance to a lens is to be understood as the distance to the appropriate principal plane of the lens. The skilled in the art knows how to determine the appropriate principal plane of the lens by taking into account the propagation direction of the light beam through the lens.

Figure 2B shows the apparatus of figure 2A, wherein the relative positions of the input light beam IBA, the first lens ETL1 and the second lens ETL2 are the same as in figure 2A. The focal lengths f1B, f2B of the first and second lens ETL1, ETL2 are different from the focal lengths f1A, f2A of the first and second lens ETL1, ETL2 in figure 2A. An increase in the focal length f1B of the first lens ETL1 causes a change of the direction of the straight line comprising the intermediate light beam axis LB. Considering that the target direction TDA is equal to the target direction TDA of figure 2A, a change of the focal length f1A of the first lens ETL1 causes a change of a location of the intersection point IPB with respect to the location of the intersection point IPA of figure 2A. To keep the deflected beam axis DAB of the displaced and deflected light beam DBB parallel to the target direction TDA, hence parallel to the beam axis DAA of the displaced and deflected light beam DBA of figure 2A, the focal length f2B of the second lens ETL2 is set to the distance between said intersection point IPB and the front principal plane CP2 of the second lens ETL2.

In Figure 2B, an adjustment of the focal length f1B of the first lens ETL1 to a value different from the focal length f1A of the first lens ETL1 in figure 2A and an adjustment of the focal length f2B of the second lens ETL2 to a value different from the focal length f2A of the second lens ETL2 in figure 2A, result in a offset h2B between the back principal point NP2 of the second lens ETL2 and an intersection between a straight line comprising the beam axis DAB of the displaced light beam DBB and a back principal plane CP2 of the second lens ETL2; wherein the offset h2B is different from the offset h2A. In particular, the offset h2B is larger than the offset h2A. As the target direction TDA is the same in both figures, and therefore the straight lines comprising the beam axis DAB and DAA are parallel between them, the difference between the offsets h2B and h2A is equal to the difference between the target displacements ∆B and ∆A. Therefore, via adjusting the focal lengths f1B, f2B, of the first and second lens ETL1, ETL2 one can control both the target deflection and the target displacement, to implement the scanning paradigm of choice, which in this case is beam (axis) shifting. In paraxial conditions, the focal lengths of the first and second lens can be set analytically with the formulas mentioned in the description of the invention.

In the same manner as in figure 2A, in figure 2C the second lens ETL2 is arranged sequentially after the first lens ETL1 such that a light beam propagates through the first lens ETL1, and subsequently through the second lens ETL2. In contrast to figure 2A, in figure 2C the beam axis BAC of the input light beam IBC is parallel to the optical axis A of the first and second lens ETL1, ETL2, and the target direction TDC is chosen to be collinear to the optical axis A, therefore the target deflection angle is zero. The target displacement is ∆C.

In figure 2C, the beam axis BAC of the input light beam IBC has an offset of h1C from the optical axis A. The focal length f1C of the first lens ETL1 is equal to one half of the distance d between the first lens ETL1 and the second lens ETL2:

$$f1C = \frac{d}{2}$$

Since the beam axis BAC of the input light beam IBC is parallel to the optical axis A, the straight line comprising the beam axis LC of the intermediate light beam propagates through the centre of a straight segment joining the back principal point PP1 of the first lens ETL1 with the front nodal point NP2 of the second lens ETL2. Thereby, to keep the displaced beam axis DAC of the displaced light beam DBC parallel to the target direction TDC, the focal length f2C of the second lens ETL2 is set to the distance between the front principal plane CP2 of the second lens ETL2 and the intersection point IPC between a first straight line and a second straight line; the first straight line comprising the beam axis LC of the intermediate light beam; the second straight line having the target direction TDC and passing through the front nodal point NP2 of the second lens ETL2, that, in the case of the embodiment of figure 2C, is equal to one half of the distance d between the first lens ETL1 and the second lens ETL2:

$$f2C = \frac{d}{2}$$

wherein:

f2C is the focal length of the second lens ETL2, and d is the distance between the first lens ETL1 and the second lens ETL2.

As a result of the interaction between an input light beam IBC and the first and second lens ETL1, ETL2, a displaced light beam DBC having a beam axis DAC is obtained. The beam axis DAC has an offset h2C from the optical axis A. The offset h2C between the beam axis DAC and the optical axis A is the same as the offset h1C between the beam axis BAC and the optical axis A in Figure 2C, therefore the target displacement is:

$$\Delta C = -2 \cdot h1C$$

Since the displaced light beam axis DAC is parallel to the input light beam axis BAC, the apparatus has kept (i.e., it has not changed) the direction of the input light beam axis BAC.

Figure 2D shows the apparatus of figure 2C, wherein the relative positions of the input light beam IBC, the first lens ETL1 and the second lens ETL2 are the same as in figure 2C, and the target direction TDC is the same as if figure 2C, but the target displacement ΔD is smaller than the target displacement ΔC in figure 2C. Therefore, the focal lengths f1D, f2D of the first and second lens ETL1, ETL2 are different from the focal lengths f1C, f2C of the first and second lens ETL1, ETL2 in figure 2C. An increase in the focal length f1D of the first lens ETL1 causes a change of the direction of the straight line comprising the beam axis LD of the intermediate light beam with respect to the direction of the straight line comprising the beam axis LC of the intermediate light beam in figure 2C. Considering that the target direction TDC in figure 2D is kept equal to the target direction TDC in figure 2C, the increase in the focal length f1D of the first lens ETL1 caused a change, with respect to figure 2C, of a location of the intersection point IPD with respect to the location of the intersection point IPC of figure 1C. To keep the beam axis DAD of the displaced light beam DBD parallel to the target direction TCD and hence parallel to the beam axis DAC of the displaced light beam DBC of figure 2C, the focal length f2D of the second lens ETL2 is adjusted to be equal to the distance between said intersection point IPD and the second lens ETL2:

$$f2D = d - f1D$$

wherein:

f2D is the focal length of the second lens ETL2, f1D is the focal length of the first lens ETL1, and d is the distance between the first lens ETL1 and the second lens ETL2.

Since the target direction TDC is collinear to the second lens ETL2 optical axis A, the first lens ETL1 and the second lens ETL2 have the same optical axis A and the input light beam axis is parallel to the optical axis A, the focal length f2D of the second lens ETL2 is set equal to the distance d between the first lens ETL1 and the second lens ETL2 minus the focal length f1D of the first lens ETL1. The focal length f1D of the first lens ETL1 is larger than the focal length f1C of the first lens ETL1 in figure 2C, leading to a smaller focal length f2D of the second lens ETL2. Therefore, as a result of the interaction between the input light beam IBC and the first and second lens ETL1, ETL2, a displaced light beam axis DAD of the light beam DB4 is obtained at a smaller offset h2D from to the optical axis A with respect to the offset h2C of figure 2C. Therefore, the target displacement is

$$\Delta D = -h1C + h2D$$

which is smaller (in absolute value) than the target displacement ΔC of figure 2C. The beam axis DAD of the displaced light beam DBC is outputted from the second lens ETL2 and is parallel to the target direction TDC. Thereby, a target displacement of the input light beam axis BAD is obtained in a beam shifting scanning paradigm, the displacement being controllable via adjustment of the focal lengths f1D, f2D of the first and second lens ETL1, ETL2.

In figures 3, 4, 5, 7, 9, 10, and 11, the apparatus comprises a third lens ETL3 having a focal length that is adjustable. The degree of focusing of a light beam comprising the displaced and/or deflected light beam axis is adjustable by means of adjusting the focal length of the third lens ETL3. The third lens ETL3 is arranged sequentially before the first lens ETL1 and at a distance d3, preferably constant, from the first lens ETL1.

Figure 3 shows two different displacements of a light beam in an embodiment of the apparatus wherein the first lens ETL1 is at a distance d from the second lens ETL2. The first lens ETL1 and the second lens ETL2 have the same optical axis A. The optical axis of the third lens A3 is parallel to the optical axis A of the first and second lens ETL1, ETL2.

A collimated light beam having a beam axis tilted with respect to the optical axis A3 of the third lens ETL3 propagates through the third lens ETL3. The third lens ETL3 causes a change in the direction of the beam axis of the light beam inputted to the third lens ETL3. The change of the direction of the light beam depends on the focal length f3E, f3F of the third lens ETL3. Figure 3 illustrates a case in which the focal lengths f3E, f3F of the third lens ETL3 are set to obtain the waist of the displaced and deflected light beam DBE, DBF at an infinite distance diE from the second lens ETL2 (i.e. to obtain displaced and deflected light beams which are collimated).

In a first configuration, the apparatus of figure 3 has a focal length f3E of the third lens ETL3, a focal length f1E of the first lens ETL1 and a focal length f2E of the second lens ETL2. In the first configuration, propagation of a collimated light beam through the third lens ETL3 results in an input light beam IBE to the first lens ETL1. The input light beam IBE is incident on the first lens ETL1 such that a straight line comprising the beam axis of the input light beam IBE intersects the front principal plane of the first lens ETL1 at an offset h1E from the front principal point of the first lens ETL1. In particular, the third lens ETL3 focuses the input beam IBE on an image plane CKE perpendicular to the optical axis A of the first and second lens ETL1, ETL2 (i.e., as the beam inputted to ETL3 is collimated, the focal length f3E of the third lens ETL3 equals the distance between the image plane CKE and the third lens ETL3). The image plane CKE is a conjugate focal plane of a target plane generated by the optical system formed by the first lens ETL1 and the second lens ETL2 and arranged perpendicularly to the optical axis A at a distance diE from the second lens ETL2, being diE equal to infinity.

Similarly to figures 2A, 2B, 2C and 2D, the focal length f2E of the second lens ETL2 is adjusted to the distance between the second lens ETL2 and an intersection point (not labelled) of a first straight line and a second straight line; the first straight line having a target direction TDE and intersecting the front nodal point of the second lens ETL2; the second straight line comprising a beam axis of the intermediate light beam propagating from the first lens ETL1 to the second lens ETL2. Thereby, the beam axis DAE of the displaced and deflected light beam DBE is parallel to the target direction TDE. A straight line comprising the displaced and deflected light beam axis DAE intersects the back principal plane of the second lens ETL2 at an offset h2E from the back principal point of the second lens ETL2.

In another configuration of the apparatus illustrated in figure 3, the relative positions between the first lens ETL1, the second lens ETL2, the third lens ETL3 and the light beam input to the third lens are kept constant with respect to the first configuration, as well as the target direction TDE. In this configuration instead, the first lens ETL1 has a focal length f1F, the second lens ETL2 has a focal length f2F and the third lens ETL3 has a focal length f3F. In the second configuration, propagation of a collimated light beam through the third lens ETL3 results in an input light beam IBF to the first lens ETL1 such that a straight line comprising the beam axis of the input light beam IBF intersects the front principal plane of the first lens ETL1 at an offset h1F from the front principal point of the first lens ETL1. The third lens ETL3 focuses the beam axis of the input light beam on an image plane CKF perpendicular to the optical axis A. Note that since the focal length f1F, f2F and f3F of the first, second and third lens have changed with respect to the first configuration while the target direction TDE and the target distance diE are kept constant, the location of the image plane CKF is different from the location of the image plane CKE.

Propagation of the input light beam through the first lens ETL1 results in an intermediate light beam having a beam axis which is tilted with respect to the beam axis of the intermediate light beam of the first configuration. Thereby, the intersection point (not labelled) between a straight line comprising the beam axis of the intermediate light beam and a straight line having the target direction TDE and passing through the front nodal point of the second lens ETL2 changes. This causes a change in the distance between said intersection and the second lens ETL2. A value of the focal length f2F of the second lens ETL2 set to a distance between said intersection and the second lens ETL2 causes the beam axis DAF of the displaced and deflected light beam DBF to be parallel to the target direction TDE and hence to the beam axis DAE, and causes the beam axis DAF to be displaced by a distance SEF from the beam axis DAE, the distance SEF being equal to the difference between the offset h2F and h2E of the beam axis of the outputted light beam DBF and DBE at each configuration respectively, i.e.,

$$SEF = h2F - h2E$$

Thereby, a target displacement and a target deflection of an input light beam axis are adjustable by means of adjusting the focal lengths of the first, second and third lens ETL1, ETL2, ETL3.

In Figure 4 the optical axis A1 of the first lens ETL1 is parallel to the optical axis A2 of the second lens ETL2, and it is parallel to the optical axis A3 of the third lens ETL3 and it is parallel to the target direction TDG. The optical axis A3 of the third lens ETL3 is collinear with the light beam axis inputted to the third lens ETL3 and is at an offset h3G from the optical axis A1 of the first lens ETL1. Figure 4 illustrates a case in which the focal lengths f3G, f3H of the third lens ETL3 are set to obtain the waist of the displaced light beam axis DAG, DAH at an infinite distance diG (i.e., to obtain displaced light beams which are collimated).

In a first configuration, the apparatus of figure 4 has a focal length f3G of the third lens ETL3, a focal length f2G of the second lens ETL2 and a focal length f1G of the first lens ETL1. In this configuration, a collimated light beam is incident on and propagates through the third lens ETL3, which causes the input light beam IBG to focus on an image plane CKG at a distance equal to the focal length f3G of the third lens ETL3. The image plane CKG is a conjugate focal plane of a target plane generated by the optical system formed by the first lens ETL1 and the second lens ETL2 and arranged perpendicularly to the optical axis A2 at a distance diG from the second lens ETL2, being diG equal to infinity.

The propagation of a collimated light beam through the third lens ETL3 results in an input light beam IBG having a beam axis BAG parallel to the optical axis A1 of the first lens ETL1. The input light beam axis BAG is incident on the front principal plane of the first lens ETL1 at an offset h1G from the optical axis A1 of the first lens ETL1. Propagation of the input light beam through the first lens ETL1 results in an intermediate light beam having a beam axis which is tilted with respect to the optical axis A1 of the first lens ETL1 and the optical axis A2 of the second lens ETL2.

Similarly to all previous figures, the focal length f2G of the second lens ETL2 is set to the distance between the second lens ETL2 and an intersection point (not labelled) of a first straight line and a second straight line; the first straight line being a straight line having the target direction TDG and passing through the front nodal point of the second lens ETL2; the second straight line comprising a beam axis of the intermediate light beam propagating from the first lens ETL1 to the second lens ETL2.

Thereby, the beam axis DAG of the displaced light beam DBG is parallel to the target direction TDG and hence the direction of the beam axis BAG of the input light beam IBG.

In another configuration of the apparatus illustrated in figure 4, the relative positions between the first lens ETL1, the second lens ETL2, the third lens ETL3 and the light beam inputted to the third lens ETL3 are kept constant with respect to the first configuration, as well as the target direction TDG. In the second configuration, the first lens ETL1 has a focal length f1H, the second lens ETL2 has a focal length f2H and the third lens ETL3 has a focal length f3H. In this configuration, propagation of a light beam through the third lens ETL3 results in an input light beam having a beam axis BAG propagating through the first lens ETL1 such that a straight line comprising the beam axis BAG of the input light beam IBG intersects the front principal plane of the first lens ETL1 at an offset h1G from the front principal point of the first lens ETL1. The third lens ETL3 focuses the input light beam on an image plane CKH perpendicular to the optical axis A1 of the first lens ETL1. Note that since the focal length f1H, f2H and f3H of the first, second and third lens have changed with respect to the first configuration while the target direction TDG and distance diG are kept constant, the location of the image plane CKH is different from the location of the image plane CKG.

In this other configuration of the apparatus of figure 4, propagation of the input light beam through the first lens ETL1, results in an intermediate light beam having a beam axis which is tilted with respect to the beam axis of the intermediate light beam of the first configuration. Thereby, the location of the intersection point (not labelled) between the beam axis of the intermediate light beam and a straight line having the target direction TDG and passing through the front nodal point of the second lens ETL2 changes. This causes a change in the distance between said intersection point and the second lens ETL2. A focal length f2H of the second lens ETL2 set to a distance between said intersection and the second lens ETL2 causes that the beam axis DAH of the displaced light beam DBH is parallel to the target direction TDG and hence to the beam axis DAG, and causes that the beam axis DAH is at a distance SGH from the beam axis DAG, being SGH equal to the difference between the offset h2H and h2G of the beam axis of the outputted light beam DBH and DBG at each configuration respectively, i.e.,

$$SGH = h2H - h2G$$

Thereby, a target displacement and a target deflection of the beam axis are adjustable by means of adjusting the focal lengths of the first, second and third lens ETL1, ETL2, ETL3.

Figure 5 shows an embodiment with a different configuration of the optical axes of the lenses of the apparatus to that of figure 4, wherein the first lens ETL1 and the second lens ETL2 have a collinear optical axis A and the optical axis A3 of the third lens is parallel to the optical axis A of the first and second lens ETL1. Similarly to figure 4, two configurations are shown for the apparatus of figure 5 where the focal lengths of the first, second and third lens ETL1, ETL2, ELT3 change between the two configurations and the displaced light beams DBI and DBJ are shifted from one another, while the position of focus of the displaced light beams DBI and DBJ is at the same distance from the apparatus.

A collimated light beam having a beam axis collinear with the optical axis A3 of the third lens ETL3 and being at an offset h1I from the optical axis A of the first lens ETL1, propagates through the third lens ETL3, resulting in an input light beam IBI having a beam axis BAI such that a straight line comprising the beam axis BAI intersects the front principal plane of the first lens ETL1 at an offset h1I from the front principal point of the first lens ETL1. Figure 5 illustrates two cases in which the focal length, f3I and f3J, of the third lens ETL3 is set to obtain the waist of the displaced light beam, DBI and DBJ, at a finite distance diI (i.e. to obtain displaced light beams which are focused at a target distance from the second lens ETL2, i.e. they are not collimated). The focal length of the third lens ETL3 is set equal to the distance of an image plane, CKI and CKJ, perpendicular to the optical axis A of the first and second lens ETL1, ETL2.

The image plane, CKI and CKJ, is a conjugate focal plane of a target plane TI generated by the optical system formed by the first lens ETL1 and the second lens ETL2 and arranged perpendicularly to the optical axis A at a finite distance dil from the second lens ETL2. Note that since the focal length of the first, second and third lens have changed between configurations while the target direction TDI and distance dil are kept constant, the location of the plane CKJ is different from the location of the plane CKI.

Similarly to all previous figures, the propagation of the input light beam IBI through the first lens ETL1 with focal length f1I and f1J for each configuration respectively, results in an intermediate light beam having a beam axis which is tilted differently between the two configurations. Thereby, the location of the intersection point between a straight line comprising the beam axis of the intermediate light beam and a straight line having the target direction TDI and passing through the front nodal point of the second lens ETL2 changes. This causes a change in a distance between said intersection point and the second lens ETL2, and a different focal length f2I and f2J of the second lens ETL2 is set at each configuration equal to the distance at each configuration between the second lens ETL2 and said intersection point (not labelled).

Thereby, a change of the focal length of the first, second and third lens causes the beam axis DAI and DAJ of the displaced light beam DBI and DBJ to be parallel to the target direction TDI and hence parallel to the direction of the beam axis BAI of the input light beam IBI. The displaced light beam axis DAI resulting from the input light beam outputted from the third lens ETL3 with focal length f3I, and subsequent propagation through the first lens ETL1 with focal length f1I, and the second lens ETL2 with focal length f2I has an offset h2I from the optical axis A of the second lens ETL2. The displaced light beam axis DAJ resulting from the input light beam outputted from the third lens ETL3 with focal length f3J, and subsequent propagation through the first lens ETL1 with focal length f1J, and the second lens ETL2 with focal length f2J has an offset h2J from the optical axis A of the second lens ETL2. It also causes the beam axis DAJ to be at a distance SIJ from the beam axis DAI equal to the difference between the offset h2J and h2I of the beam axis of the outputted light beam DBJ and DBI at each configuration respectively, i.e.,

$$SIJ = h2J - h2I$$

Thereby, a target displacement and a target deflection of the beam axis of the displaced light beam and a target distance dil of the displaced light beam waist are adjustable by means of adjusting the focal lengths of the first, second and third lens ETL1, ETL2, ETL3.

Figures 6A and 6B disclose an apparatus for displacing an input light beam axis and/or changing a direction of the input light beam axis. The apparatus comprises an adjustable beam expander arranged sequentially before the first lens ETL1. The apparatus permits keeping the size of a displaced light beam outputted from the second lens ETL2 as the collimated beam size of the light beam inputted to the adjustable beam expander. The beam expander comprises a first additional lens ETL4 and a second additional lens ETL5. Each of the first and second additional lens ETL4, ETL5 is an electrically tuneable lens. The first additional lens ETL4 is at a distance d2 from the second additional lens ETL5. The first additional lens ETL4 and the second additional lens ETL5 share the same optical axis A4. The first lens ETL1 and the second lens ETL2 share the same optical axis A. The optical axis A4 is parallel to the optical axis A and to the target direction TDK. A light beam having a beam width $bwK_{in}$ is inputted to the first additional lens ETL4. The light beam has a beam axis collinear with the optical axis A4 of the first additional lens ETL4.

The apparatus comprises means for adjusting the focal lengths of the first additional lens ETL4 and of the second additional lens ETL5 such that a beam width $bwK_{out}$ of a displaced light beam DBJ outputted from the second lens ETL2 is equal to a beam width $bwK_{in}$ of a light beam inputted to the first additional lens ETL4. The distance d2 between the first additional lens ETL4 and the second additional lens ETL5 can be different from the distance d between the first lens ETL1 and the second lens ETL2, as long as their relationship is known. That is,

$$d2 = m \cdot d$$

wherein:

    d2 is the distance between the first additional lens ETL4 and the second additional lens ETL5, and
    d is the distance between the first lens ETL1 and the second lens ETL2, and
    m is a positive real number corresponding to the ratio between the distances d2 and d.

In figure 6A, the first additional lens ETL4 has a focal length f4K and the second additional lens ETL5 has a focal length f5L. To obtain an outputted beam with a beam width $bwK_{out}$ equal to the beam width $bwK_{in}$ of the light beam inputted to the first additional lens ETL4, the values of the focal length f4L of the first additional lens ETL4 and the focal length f5L of the second additional lens ETL5 have to be set proportional to the focal length f2L of the second lens ETL2 and to the focal length f1L of the first ETL1, respectively, as follows:

$$f4L = m \cdot f2L$$

$$f5L = m \cdot f1L$$

wherein:

f2L is the focal length of the second lens ETL2,
f1L is the focal length of the first lens ETL1,
f4L is the focal length of the first additional lens ETL4,
f5L is the focal length of the second additional lens ETL5, and
m is the positive real number corresponding to the ratio between the distances d2 and d.

Therefore, the values of the focal length f4L of the first additional lens ETL4 and the focal length f5L of the second additional lens ETL5 depend on the values of the focal lengths f1L, f2L of the first and second lens ETL1, ETL2. In figure 6A, these values are:

$$f4L = \frac{d2}{2}$$

$$f5L = \frac{d2}{2}$$

since each of the focal length f1L of the first lens ETL1 and the focal length f2L of the second lens ETL2 are equal to half of the distance d between the first lens ETL1 and the second lens ETL2. In such case, the adjustable beam expander of figure 6A does not produce any expansion of a collimated light beam inputted to it.

The input light beam IBK, resulting from propagation of a collimated light beam through the first and second additional lens ETL4, ETL5, has a beam axis BAK at an offset h1K from the optical axis A of the first and second lens ETL1, ETL2. As explained above in figures 2C and 2D, the first and second lens ETL1, ETL2 allow displacing the beam axis BAK of the input light beam IBK by adjusting the focal lengths f1K, f2K of the first and second lens ETL1, ETL2. A displaced light beam DBK, having a beam axis DAK, results from propagation of the input light beam IBK through the first and second lens ETL1, ETL2. The expansion caused by the adjustable beam expander formed by the first and second additional lens ETL4, ETL5 is an inverse of the expansion caused by the optical system formed by the first and second lens ETL1, ETL2. Therefore, the beam width bwK$_{out}$ of the displaced beam DBK is equal to the beam width bwK$_{in}$ of the input light beam IBK.

Figure 6B shows the apparatus of figure 6A, wherein the light beam inputted to the first additional lens ETL4, and the relative positions of the light beam input to the first additional lens ETL4, the first additional lens ETL4, the second additional lens ETL5, the first lens ETL1, the second lens ETL2 and the target direction TDK are the same as in figure 6A, while the target displacement of the light beam outputted by ETL2 is smaller than that of figure 6A. Therefore, the focal lengths f1L, f2L of the first and second lens ETL1, ETL2 are different from the focal lengths f1K, f2K of the first and second lens ETL1, ETL2 in figure 6A. As explained above in reference to figures 2C and 2D, an offset h2L of a beam axis DAL of a displaced light beam DBL can be controlled by adjusting the focal lengths f1L, f2L of the first and second lens ETL1, ETL2, while keeping the beam axis DBL parallel to the target direction TDK.

In figure 6B, as explained above in figure 6A, to keep the beam width bwL$_{out}$ of the displaced light beam DBL equal to the beam width bwK$_{in}$ of the light beam inputted to the first additional lens ETL4, the following relationship between the focal lengths f4L, f5L of the first and second additional lens ETL4, ETL5 and the focal lengths f1L, f2L of the first and second lens ETL1, ETL2 is kept:

$$f4L = m \cdot f2L$$

$$f5L = m \cdot f1L$$

wherein:

f2L is the focal length of the second lens ETL2,
f1L is the focal length of the first lens ETL1,
f4L is the focal length of the first additional lens ETL4,
f5L is the focal length of the second additional lens ETL5, and
m is a positive real number corresponding to the ratio between the distances d2 and d.

In this case, the expansion caused by the adjustable beam expander is an inverse of the expansion caused by the optical system formed by the first and second lens ETL1, ETL2. In particular, as the light beam axis inputted to the first additional lens ETL4 is collinear with the adjustable beam expander optical axis A4, the propagation of a light beam through the adjustable beam expander does not alter the light beam axis direction, and results in an input light beam IBL having a beam axis BAL being at an offset h1L from the optical axis A of the first lens ETL1; the input light beam IBL having a beam width larger than the beam width bwKin.

As explained in figure 2C and 2D, the target direction TDK is collinear to the optical axis A of the first and second lens ETL1, ETL2 and parallel to the input light beam axis BAL; the focal length f2L of the second lens ETL2 is set equal to the distance d between the first lens ETL1 and the second lens ETL2 minus the focal length f1L of the first lens ETL1. The focal length f1L of the first lens ETL1 is longer than the focal length f1C of the first lens ETL1 in figure 2C, leading to a shorter focal length f2L of the second lens ETL2 with respect to the focal length f2C of figure 2C, and therefore to a smaller offset h2L of the displaced light beam axis DAL from to the optical axis A with respect to the offset h2C of figure 2C. The offset h2L being also smaller than the offset h2K of figure 6A. The beam axis DAL of the displaced light beam DBL is outputted from the second lens ETL2 and is parallel to the target direction TDK.

Thereby, a displacement of the input light beam axis is obtained, the displacement being controlled via adjustment of the focal lengths of the first and second lens ETL1, ETL2; at the same time as the beam width of the displaced light beam is controlled via the proportional adjustment of the focal lengths of the first and second additional lenses ETL4, ETL5 with respect to the focal lengths of the second and first lens ETL2, ETL1.

Figures 7A and 7B show an apparatus for displacing an input light beam axis and/or changing a direction of the input light beam axis. The apparatus comprises a third lens ETL3, an adjustable beam expander, a first lens ETL1 and a second lens ETL2. The beam expander comprises a first additional lens ETL4 and a second additional lens ETL5. The third lens ETL3 is arranged sequentially before the adjustable beam expander, the adjustable beam expander is arranged sequentially before the first lens ETL1. The apparatus shown in this embodiment permits setting the target displacement and deflection (zero in this case) and distance from the second lens ETL2 of the beam waist of a displaced light beam outputted from the second lens ETL2. The first lens ETL1 and the second lens ETL2 have the same optical axis A, and the target direction TDM is collinear with the optical axis A. The first additional lens ETL4, the second additional lens ETL5 and the third lens ETL3 have the same optical axis A3. The optical axis A3 is parallel to the optical axis A. The third lens ETL3 is at a distance d3 from the first lens ETL1, the third lens ETL3 is at a distance d4 from the first additional lens ETL4 of the adjustable beam expander, the distance between the first and second additional lenses ETL4 and ETL5 is d2, and the distance between the first and second lens ETL1 and ETL2 is d.

The light beam axis of the light beam inputted to ETL3 is collinear with the optical axis A3. The relative positions of a light beam inputted to the third lens ETL3, the third lens ETL3, the first additional lens ETL4, the second additional lens ETL5, the first lens ETL1 and the second lens ETL2 are the same in figure 7A and in figure 7B. In addition, an offset h1M between the beam axis BAM of the input light beam IBM and the optical axis A of the first lens ETL1 in figure 7A is equal to an offset h1N between the beam axis BAN of an input light beam IBN and the optical axis A of the first lens ETL1 in figure 7B.

As explained above, the beam expander enables controlling a beam width of the displaced light beam DBM by adjusting the focal length of the first additional lens ETL4 and of the second additional lens ETL5, such as a sum of the focal length of the first additional lens ETL4 and a focal length of the second additional lens ETL5 equals a distance between the first additional lens ETL4 and the second additional lens ETL5 which in turn equals a multiple m of the distance between the first lens ETL1 and the second lens ETL2. Therefore, the offset h2M between a beam axis DAM of the displaced light beam DBM and the optical axis A of the second lens ETL2, and hence the target displacement, can be controlled by adjusting the focal length of the first lens ETL1 and the focal length of the second lens ETL2. The third lens ETL3 enables controlling a degree of focusing of a displaced light beam DBM by adjusting the focal length f3M of the third lens ETL3.

In particular, as the light beam inputted to the third lens ETL3 is collimated, the focal length f3M of the third lens ETL3 is set equal to a distance between the third lens ETL3 and an image plane CJM. The image plane CJM is a conjugate focal plane of a target plane TM generated by the optical system formed by the adjustable beam expander, the first lens ETL1 and the second lens ETL2. The target plane TM being arranged perpendicularly to the optical axis A and at a finite distance diM from the second lens ETL2. In this manner, a displaced light beam DBM having a beam waist on the target plane TM is obtained. Thereby, the beam axis DAM of the displaced light beam DBM is parallel to the target direction TDM and hence to the direction of the input light beam IBM, i.e., the target deflection is zero.

The beam axis DAM of the displaced light beam DBM, resulting from the light beam outputted from the third lens ETL3 with focal length f3M, and its subsequent propagation through the first additional lens ETL4, the second additional lens ETL5, the first lens ETL1 and the second lens ETL2, has an offset h2M from the back principal point of the second lens ETL2.

In figure 7B, the focal length f3N of the third lens ETL3, the focal length of the first lens ETL1 and the focal length of the second additional lens ETL5 are set longer than in figure 7A, whereas the focal length of the second lens ETL2 and the focal length of the first additional lens ETL4 are set shorter than in figure 7A. The focal length f3N of the third lens ETL3 is set equal to a distance between the third lens ETL3 and an image plane CJN, the image plane CJN being at a longer distance from the third lens ETL3 than the image plain CJM in figure 7A. The plane CJN is a conjugate focal plane of a same target plane TM than in figure 7A generated by the optical system formed by the adjustable beam expander, the first lens ETL1 and the second lens ETL2. The target plane TM being arranged perpendicularly to the optical axis A at a finite distance diM from the second lens ETL2, equal to the distance diM in figure 7A. Thereby, the beam axis DAN of the displaced light beam DBN is parallel the target direction TDN and hence the direction of the input light beam IBN, i.e., the target deflection is zero.

The beam axis DAN of the displaced light beam DBN, resulting from the light beam outputted from the third lens ETL3, and subsequent propagation through the first additional lens ETL4, the second additional lens ETL5, the first lens ETL1 and the second lens ETL2, has an offset h2N from the back principal point of the second lens ETL2 smaller than the offset h2M of figure 7A, and hence the target displacement in figure 7B is smaller than the target displacement in figure 7A.

Figures 8A, 8B and 8C show an apparatus for displacing an input light beam axis and/or changing the direction of a light beam axis, that enables displacing and/or changing the direction of an input light beam in two dimensions. The apparatus comprises a mirror M1, a first lens ETL1, a second lens ETL2, a hollow-roof mirror HM1 and means for rotating the hollow-roof mirror HM1, a periscope P1 and means for rotating the periscope P1 synchronously with the rotation of the hollow-roof mirror HM1. The first lens ETL1 and the second lens ETL2 have the same optical axis A. The target direction TDP is collinear to the optical axis A of the first and second lens ETL1, ETL2. The second lens ETL2 is arranged sequentially after the mirror M1. The first lens ETL1 is arranged sequentially after the second lens ETL2. The hollow-roof mirror HM1 is arranged sequentially after the first lens ETL1, in order to redirect a light beam outputted by the first lens ETL1 back to the first lens ETL1. Then, from the perspective of the light beam redirected towards the first lens ETL1, the first lens ETL1 is arranged sequentially after the hollow-roof mirror HM1, the second lens ETL2 is arranged sequentially after the first lens ETL1, and lastly a periscope P1 is arranged sequentially after the second lens ETL2. In this manner a light beam inputted to the mirror M1 interacts with the components of the apparatus in the following order: mirror M1, second lens ETL2, first lens ETL1, hollow-roof mirror HM1, first lens ETL1, second lens ETL2 and periscope P1. The means for rotating the hollow-roof mirror HM1 and the means for rotating the periscope P1 are configured for synchronously rotating the hollow-roof mirror HM1 and the periscope P1 about the optical axis A. A collimated light beam inputted to the mirror M1 has a beam axis $BAP_{in}$ and a beam width $bWP_{in}$.

As shown in figure 8A, the mirror M1 redirects the light beam axis $BAP_{in}$ such that a reflected light beam has a beam axis collinear with the optical axis A and it propagates through the second lens ETL2 and then through the first lens ETL1. The focal length f1P of the first lens ETL1 is equal to the focal length f2P of the second lens ETL2 and equal to half of the distance d between the first lens ETL1 and the second lens ETL2. Since the focal length f1P of the first lens ETL1 is equal to the focal length f2P of the second lens ETL2, the propagation through the second and first lens ETL2, ETL1 does not cause any expansion of the light beam.

A light beam resulting from the propagation through the first lens ETL1 is inputted to the hollow-roof mirror HM1, which, through a double reflection, causes a parallel displacement, by a distance h1P from the optical axis A of the first and second lens ETL1, ETL2, of the beam axis BAP of the input light beam IBP. This displacement by the hollow-roof mirror HM1 does not cause any change of the beam width of the light beam BAP inputted to the hollow-roof mirror HM1 (i.e. no change in magnification). Thereby an input light beam IBP having a beam axis BAP with a beam width bwP equal to the

beam width $bwP_{in}$ is obtained. The input light beam IBP then propagates through the first lens ETL1 and then through the second lens ETL2. The first lens ETL1 causes a change in the direction of the beam axis BAP of the light beam IBP inputted to the first lens ETL1, thereby an intermediate light beam having a beam axis tilted with respect to the beam axis BAP is outputted by the first lens ETL1. The angle between the beam axis BAP of the input light beam IBP and the beam axis of the intermediate light beam depends on the focal length f1P of the first lens ETL1. The intermediate light beam propagates from the first lens ETL1 to the second lens ETL2, and it subsequently propagates through the second lens ETL2. The second lens ETL2 causes a change in the direction of the beam axis of the intermediate light beam inputted to the second lens ETL2, thereby a displaced light beam DBP having a beam axis DAP and a beam width $bwP_{out}$ is outputted from the second lens ETL2. As explained above, to obtain a beam axis DAP parallel to the target direction TDP, the focal length f2P of the second lens ETL2 is set to a distance between the second lens ETL2 and an intersection point (not labelled) of a first straight line and a second straight line; the first straight line being a straight line having the target direction TDP and passing through the front nodal point of the second lens ETL2; the second straight line comprising a beam axis of the intermediate light beam propagating from the first lens ETL1 to the second lens ETL2.

As a result of the interaction between the input light beam IBP and the first and second lens ETL1, ETL2, a displacement of a light beam axis is obtained. In particular, a straight line comprising the beam axis DAP of the displaced light beam DBP intersects the back principal plane of the second lens ETL2 at an offset h2P from the back principal point of the second lens ETL2. The outputted light beam axis DAP is parallel to the target direction TDP and the optical axis A. A light beam target displacement ΔP is produced because a straight line comprising the beam axis DAP intersects the front principal plane of the first lens ETL1 at a distance from the intersection of a straight line comprising the beam axis BAP of the input light beam IBP and the principal plane of the first lens ETL1, the target displacement ΔP being equal to:

$$\Delta P = -h1P + h2P$$

The propagation through the first and second lens ETL1, ETL2 does not cause any magnification of the light beam because the focal length f1P of the first lens ETL1 is equal to the focal length f2P of the second lens ETL2.

The displaced light beam DBP is inputted to the periscope P1. The periscope P1 displaces the light beam by a constant distance hP1, equal to the offset h1P, by means of a double reflection of the displaced light beam DBP. In particular, in figure 8A the constant distance hP1 is also equal to the offset h2P and hence the beam axis DAP2 of the displaced light beam DBP, further displaced by the periscope P1, is collinear with the optical axis A.

In figure 8B, the relative positions between the mirror M1, the second lens ETL2, the first lens ETL1, the hollow-roof mirror HM1, and the periscope P1 are the same as in figure 8A. The target direction TPD is also the same. The light beam inputted to the mirror M1 is also collimated and it also has the same beam width $bwP_{in}$ as in figure 8A. The focal length f1Q of the first lens ETL1 is shorter than the focal length f1P of the first lens ETL1 of figure 8A. The focal length f2Q of the second lens ETL2 is longer than the focal length f2P of the second lens ETL2 of figure 8A. Therefore, a propagation of a light beam, from mirror M1, through the second lens ETL2 and then through the first lens ETL1, results in a light beam being outputted from the first lens ETL1 and being demagnified, such that the beam width is equal to the beam width bwQ of the input light beam IBK. A subsequent double reflection on the hollow-roof mirror HM1 results in an input light beam IBQ having a beam axis BAQ and the beam width bwQ. The input light beam IBQ propagates through the first lens ETL1 and then through the second lens ETL2.

The equation below describes the effect of a double-pass propagation through the first lens ETL1 and the second lens ETL2 (specifically first through the second lens and the first lens ETL2, ETL1 and subsequently through first and second lens ETL1, ETL2) as the effect of an adjustable beam expander pre-compensating any change in magnification resulting from the propagation of an input light beam through the first lens ETL1 and then the second lens ETL2. In this equation, the variables of the equation have the same meaning as the references in figure 8B:

$$bwQ_{out} = \frac{f2Q}{f1Q} \cdot bwQ = \frac{f2Q}{f1Q} \cdot \frac{f1Q}{f2Q} \cdot bwP_{in} = bwP_{in}$$

From this equation, it can be deduced that the beam width $bwQ_{out}$ of the displaced beam DBQ is the same as the beam width $bwP_{in}$, and, in particular, it does not depend on the focal length f1Q of the first lens nor on the focal length f2Q of the second lens ETL2, as long as they are changed according to the equation:

$$f2Q = d - f1Q,$$

which corresponds to the equation for setting the focal lengths of the first and second lens ETL1, ETL2 in figure 2C, 2D.

The target displacement ΔQ instead depends on the focal length f1Q of the first lens ETL1, the offset h1P and the distance d between the first lens ETL1 and the second lens ETL2, as follows:

$$\Delta Q = -\frac{d \cdot h1P}{f1Q}$$

Note that the target displacement ΔQ of figure 8B is larger than the target displacement ΔP of figure 8A, as a consequence of the focal length f1Q of the first lens ETL1 in figure 8B being smaller than the focal length f1P of the first lens ETL1 in figure 8A. This also means that the offset h2Q of the beam axis DAQ of the displaced light beam DBQ is larger than the offset h2P of the beam axis DBP of the displaced light beam DBP. The periscope P1 displaces the light beam by a constant distance hP1, equal to the offset h1P, by means of a double reflection of the displaced light beam DBQ. In particular, in figure 8B the constant distance hP1 is smaller than the offset h2Q and hence the beam axis DAQ2 of the displaced light beam DBQ, further displaced by the periscope P1, is parallel to the optical axis A at a distance from it equal to the difference between h2Q and hP1.

Therefore, by means of adjusting the focal lengths of the first and second lens ETL1, ETL2, one can adjust a target displacement of the input beam axis, obtained by inputting a collimated beam onto the mirror M1 and propagation of the resulting beam through the second lens ETL2 and the first lens ETL1 and by redirecting it parallelly to itself in the opposite direction via a hollow roof mirror HM1. At the same time, the beam width $bwQ_{out}$ of the light beam DBQ is kept as the original collimated beam width $bwP_{in}$ without the need of additional lenses for an adjustable beam expander as in this embodiment of the apparatus the beam width is being controlled by means of adjusting the focal length f1Q, f2Q of the first and second lens ETL1, ETL2 in the double-pass propagation back and forth through them.

In figure 8C, the hollow-roof mirror HM1 and the periscope P1 have been synchronously rotated by 180 degrees about the optical axis A with respect to their position in figure 8B, producing a negative offset of h2Q from the optical axis A. Thereby resulting in the displaced beam axis DAR in figure 8C at a distance from the displaced beam axis DAQ in figure 8D equal to twice the offset h2Q and conversely, the beam axis DAR2 of the displaced beam DBR after it propagates through the periscope P1 is parallel to the optical axis A and at a distance from the beam axis DAQ2 of the displaced beam DBQ after it propagates through the periscope P1 equal to twice the difference between h2Q and hP1. The skilled in the art will understand that by means of rotating the hollow-roof mirror HM1 and the periscope P1 by different angles about the optical axis A, a light beam can be displaced in two dimensions. In particular, a full rotation of 360 degrees about the optical axis A, with the apparatus having the first and second lens ETL1 and ETL2 set with focal lengths f1Q and f2Q, respectively, to achieve a target displacement ΔQ, will lead to the displaced beam axis after propagation through the periscope P1 to draw a cylinder of diameter equal to twice the difference between h2Q and hP1. Changing the target displacement will lead to draw cylinders of different diameters, thereby, accessing a two-dimensional coordinate space in polar coordinates.

Figure 9A shows the apparatus of figure 8A wherein a third lens ETL3 has been arranged sequentially before the mirror M1. The third lens ETL3 enables controlling a degree of focusing of the displaced light beam DBS by adjusting the focal length of the third lens ETL3 as explained above for example in relation to figures 3 4, 5 and 7. In particular, the focal length of the third lens ETL3 is set to obtain a waist of the displaced light beam DBS on a target plane TS perpendicular to the optical axis A at a finite distance diS from the second lens ETL2 (i.e. to obtain a focussed displaced light beam). As the light beam inputted to the third lens ETL3 is collimated, the focal length f3S of the third lens ETL3 is set equal to a distance between the third lens ETL3 and an image plane CJS. The image plane CJS is a conjugate focal plane of the target plane TS generated by the optical system formed by the mirror M1, the adjustable beam expander formed sequentially by the second lens ETL2 and the first lens ETL1, the hollow roof mirror HM1, the first lens ETL1, the second lens ETL2, and the periscope P1.

Upon propagation of a collimated light beam having a beam axis $BAS_{in}$ having a beam width $bwS_{in}$ through the third lens ETL3, subsequent reflection on mirror M1, subsequent propagation through the second lens ETL2 and the first lens ETL1, and subsequent double reflection on the hollow-roof mirror HM1, an input light beam IBS having a beam axis BAS parallel to the optical axis A is obtained. The beam axis BAS is at an offset h1S from the optical axis A. Upon propagation of the input light beam IBS through the first and second lens ETL1, ETL2, a displaced light beam DBS having a beam axis DAS is outputted from the second lens ETL2. The focal length f1S of the first lens ETL1 and the focal length f2S of the second lens ETL2 are adjusted such that the displaced beam axis DAS is parallel to a target direction TDS and has an offset h2S from the optical axis A.

Note that, as in figures 8A, 8B, to achieve a target displacement $\Delta S$, the focal length f1S of the first lens ETL1 is set according to the equation:

$$f1S = -\frac{d \cdot h1S}{\Delta S}$$

and the focal length f2S of the second lens ETL2 is set equal to a distance between the second lens ETL2 and an intersection point of a first straight line and a second straight line; the first straight line having the target direction TDS and passing through the front nodal point of the second lens ETL2; the second straight line comprising a beam axis of the intermediate light beam propagating from the first lens ETL1 to the second lens ETL2, the intermediate light beam resulting from propagation of the input light beam IBS through the first lens ETL1. In particular, for the case where the input beam axis BAS is parallel to the optical axis A of the first and second lens ETL1, ETL2, and the target deflection angle is zero, as in figure 8A, 8B, 8C, the focal length f2S of the second lens ETL2 is set according to the equation:

$$f2S = d - f1S,$$

wherein d is the distance between the first lens ETL1 and the second lens ETL2.

The displaced light beam DBS is inputted to the periscope P1. The periscope P1 displaces the light beam by a constant distance hP1 by means of a double reflection of the light beam DBS. In particular, in figure 9A the constant distance hP1 is equal to the offset h1S and hence the light beam axis displaced by the periscope P1 is parallel with the optical axis A at an offset equal to the difference between the offset hP1 and the offset h2S. The displaced light beam focuses on the target plane TS at a distance diS from the second les ETL2.

Figure 9B shows the apparatus of figure 9A wherein the third lens ETL3 is a diverging lens, i.e., it has a negative focal length. The third lens ETL3 enables controlling a degree of focusing of the displaced light beam DBT by adjusting the focal length of the third lens ETL3 as explained above. In particular, the focal length of the third lens ETL3 is set to obtain a waist of the displaced light beam DBT at a distance diQ from the second lens ETL2 equal to infinite (i.e., to obtain a collimated displaced light beam). As the light beam inputted to the third lens ETL3 is collimated, the focal length f3T of the third lens ETL3 is set to a distance between the third lens ETL3 and a virtual image plane CJT arranged sequentially before the third lens ETL3. The virtual image plane CJT is a conjugate focal plane of a target plane TQ generated by the optical system formed by the mirror M1, the adjustable beam expander formed sequentially by the second lens ETL2 and the first lens ETL1, the hollow roof mirror HM1, the first lens ETL1, the second lens ETL2, and the periscope P1. The target plane TQ being arranged perpendicularly to the optical axis A at a distance diQ from the second lens ETL2 equal to infinite. In this manner, a displaced collimated light beam DBT is obtained.

Upon propagation of a collimated light beam having a beam axis $BAT_{in}$ through the third lens ETL3, subsequent reflection on mirror M1, subsequent propagation through the second lens ETL2 and the first lens ETL1, and subsequent double reflection on the hollow-roof mirror HM1, an input light beam IBT having a beam axis BAT parallel to the optical axis is obtained. The beam axis BAT is at an offset h1T from the optical axis A. Upon propagation of the input light beam IBT through the first and second lens ETL1, ETL2, a displaced light beam DBT having a beam axis DAT is outputted from the second lens ETL2. The focal length f1T of the first lens ETL1

and the focal length f2T of the second lens ETL2 are adjusted such that the displaced beam axis DAT is parallel to the target direction TDT and has an offset h2T from the optical axis A. Note that, unlike in figure 9A, to achieve a target displacement $\Delta T$ and a target deflection $\alpha B$, the focal length f1T of the first lens ETL1 is set according to the equation:

$$f1T = \frac{d \cdot h1T}{d \cdot \alpha T - \Delta T}$$

and, the focal length f2T of the second lens ETL2 is set to a distance between the second lens ETL2 and an intersection point of a first straight line and a second straight line; the first straight line having the target direction TDT and passing through the front nodal point of the second lens ETL2; the second straight line comprising a beam axis of the intermediate light beam propagating from the first lens ETL1 to the second lens ETL2, the intermediate light beam resulting from propagation of the input light beam IBT through the first lens ETL1. Note that, for the case where the input beam axis BAT is parallel to the optical axis A of the first and second lens ETL1, ETL2, and target deflection angle is $\alpha T$, this condition corresponds to setting the focal length f2T of the second lens ETL2 according to the equation:

$$f2T = \frac{d \cdot (\Delta T + h1T - d \cdot \alpha T)}{\Delta T}$$

wherein d is the distance between the first lens ETL1 and the second lens ETL2. Note that, unlike in figure 9A, the condition of the sum of the focal lengths of the first and second lenses equalling the distance d no longer holds in this case.

The displaced light beam DBT is inputted to the periscope P1. The periscope P1 displaces the light beam by a constant distance by means of a double reflection of the light beam DBT. The displaced and deflected light beam axis displaced by the periscope P1 is still collimated and parallel to the target direction TDT and intersects the optical axis A at the plane TS.

Figure 9C and figure 9D are extensions of figure 9A and figure 9B, respectively, and represent the same embodiment of the present invention in which two different scanning paradigms are employed, namely focused beam shifting at a constant distance in figure 9C, and collimated beam steering about a constant pivot point in figure 9D.

Figure 9C shows the embodiment where the focal lengths of the first, second and third lens ETL1, ETL2, and ETL3 are set as described for figure 9A to achieve three different target displacements $\Delta U1$, U2, $\Delta U3$ and the same target direction TDU collinear to the optical axis A of the first and second lens ETL1, ETL2. Three parallelly displaced light beam axes DAU1, DAU2, and DAU3 are obtained, whereby DAU3 is collinear with the optical axis A. The respective light beams DBU1, DBU2 and DBU3 all focus (i.e., they have their beam waist) on a target plane TU perpendicular to the optical axis A.

By means of synchronously rotating the hollow-roof mirror HM1 and the periscope P1 by different angles about the optical axis A, a light beam can be displaced in two dimensions. In particular, a full rotation of 360 degrees about the optical axis A will lead to the displaced beam axis after propagation through the periscope P1 to draw a cylinder whereby its diameter depends on the target displacement, thereby accessing a two-dimensional coordinate space in polar coordinates. This type of 2-D beam scanning paradigm, i.e., 2-D telecentric focussed beam shifting, is suited, for example, in anterior eye segment scanning applications, for example in combination with optical coherence tomography-based corneal topography and anterior segment biometry.

Figure 9D shows the embodiment where the focal lengths of the first, second and third lens ETL1, ETL2, and ETL3 are set as described for figure 9B to achieve three different target displacements $\Delta V1$, $\Delta V2$, $\Delta V3$ and three corresponding target directions TDV1, TDV2, TDV3 (or alternatively three corresponding target deflections $\alpha B$, $\alpha C$, $\alpha D$), whereby the target direction TDV3 is collinear to the optical axis A of the first and second lens ETL1, ETL2 and therefore $\alpha D = 0$. Three displaced and deflected light beam axes DAV1, DAV2 and DAV3 are obtained, whereby DAV3 is collinear with the optical axis A. The respective light beams DBV1, DBV2 and DBV3 are all collimated, and they all pivot about a constant point at the intersection of the optical axis A with the target plane TV perpendicular to the optical axis A.

In figure 9D, by means of synchronously rotating 360 degrees the hollow-roof mirror HM1 and the periscope P1 by different angles about the optical axis A, a light beam can be displaced in two dimensions and draw a conical surface whereby its base diameter depends on the target deflection. This type of 2-D beam scanning paradigm, i.e., 2-D collimated beam steering about a constant pivot point, is suited, for example, in posterior eye segment scanning applications, for example in combination with optical coherence tomography-based retinal scanners.

Therefore, by means of adjusting the focal lengths of the first, second and third lens ETL1, ETL2, ETL3, especially allowing the latter to take both positive, infinite (i.e., zero power) and negative focal length values, one can adjust a target displacement and/or a target deflection of the input beam axis, and utilise the disclosed apparatus as a versatile and low-cost light beam scanner for both anterior and posterior eye segment, without the need to mechanically adjust any component.

Figure 10A shows a perspective view of the apparatus of figure 9 with a collimated light source CLS supplying a collimated light beam having a beam axis.

The apparatus is being used for scanning a target plane TW at different polar coordinates with a beam waist of a scanning light beam DBW, the axis of the light beam being perpendicular to the scanned target plane TW. A light beam propagates from a collimated light source CLS to a focused light beam at the target plane TW. The target plane TW is set at a distance diW from the second lens ETL2.

Figure 10B shows a side view of the apparatus shown in figure 10A upon synchronous rotation of the hollow-roof mirror HM1 and the periscope P1. An input light beam IBP and a displaced light beam DBW are obtained. Upon propagation through the periscope P1, the displaced light beam DBW is further displaced by a constant distance, resulting in a displaced light beam with its axis collinear with the optical axis A of the first and second lens ETL1, ETL2.

Figures 11A and 11B show a perspective and top view of an apparatus being used, in this case in a telecentric beam shifting scanning paradigm, and more specifically for scanning a target plane at different polar coordinates with a beam waist of a scanning light beam, the axis of the light beam being perpendicular to the scanned target plane TX. A light beam propagates from a collimated light source CLS to the target plane TX through the apparatus for displacing and/or changing a direction of an input light beam axis. In figure 11A, the displaced light beam axis is parallel to a target direction TDX. The target direction TDX is collinear to the optical axis A of the first and second lens ETL1, ETL2. The optical axis A is also collinear to the optical axis of the third lens ETL3. Adjustment of the focal length of the third lens ETL3 enables controlling the degree of focusing of the displaced light beam DBX.

The embodiment shown in figures 11A and 11B comprises a first hollow-roof mirror HM1, a second hollow-roof HM2, a third hollow-roof mirror HM3 and a fourth hollow-roof mirror HM4. The first hollow-roof mirror HM1 is mechanically connected via a rotatable shaft e1 to the fourth roof-mirror HM4 enabling synchronous rotation of the first roof-mirror HM1 and of the fourth roof-mirror HM4 via a single actuator (e.g., a double shaft motor). A light beam propagates from a collimated light source CLS to the target plane TX through the optical components of the apparatus. The collimated light beam firstly propagates through a third lens ETL3, with the light beam axis collinear to the optical axis of the third lens ETL3, then it is subsequently reflected on a first face of a two-face mirror M2 towards the optical axis A of the second lens ETL2, then it subsequently propagates through the second lens ETL2, and it is subsequently reflected on a second hollow-roof mirror HM2, which redirects the resulting light beam towards a third hollow-roof mirror HM3, which realigns the light beam axis with the optical axis A of the first lens ETL1. The light beam subsequently propagates through the first lens ETL1, and it is subsequently reflected on the first hollow-roof mirror HM1. Thereby, an input light beam IBX is outputted from the first hollow-roof mirror HM1 at an offset from the first lens ETL1 optical axis. The input light beam IBX propagates through the first lens ETL1, and it is subsequently reflected back on the third hollow-roof mirror HM3, then it is subsequently reflected on the second hollow-roof mirror HM2, after which it propagates through the second lens ETL2, and it is subsequently reflected on the fourth hollow-roof mirror HM4, before being subsequently reflected on the second face of the two-face mirror M2 and final propagation until the target plane TX.

Rotation of the shaft e1 enables adjusting the angular coordinate, in terms of a polar coordinate system, of the displaced light beam DBX with respect to the optical axis A of the second lens ETL2. The adjustment of the focal lengths of the first, second lenses ETL1, ELT2 as explained in figure 9A, causes an adjustment of the radial coordinate, in terms of a polar coordinate system, of the displaced light beam DBX. Adjustment of the focal length of the third lens ETL3 enables setting the waist of the scanning light beam at the desired light propagation distance from the second lens ETL2. Synchronous rotation of the first and fourth hollow roof mirrors HM1 and HM4 causes an adjustment of the angular coordinate, in terms of a polar coordinate system, of the displaced light beam DBX after propagation through the fourth hollow roof mirror HM4. The disclosed configuration of the two-faced mirror M4 permits aligning (within the tolerance of the thickness of such component) the light beam axis of the collimated light beam inputted to the third lens ETL3 with the central displacement (the one with radial coordinate equal to zero) of the displaced light beam after propagation through the fourth hollow roof mirror M4 and the second face of the two-face mirror M2. This makes the apparatus compact in the direction of the light beam axis of the collimated light beam inputted to the third lens ETL3, this making it a versatile and compact solution for a beam scanner.

Figures 12A and 12B show relationships for the apparatus of figures 2C and 2D, and the apparatus of figure 8A and 8B, where the first lens ETL1 and the second lens ETL2 have the same optical axis A, and where the beam axis of the input light beam is parallel to the optical axis A. The graphs of figures 12A and 12B have been made for a distance d of 200 mm between the first lens ETL1 and the second lens ETL2.

Figure 12A shows a relationship between the focal length $f_1$ of the first lens ETL1 (labelled as f1C and f1D in Figures 2C and 2D, respectively) and the focal length $f_2$ of the second lens ETL2 (labelled as f2C and f2D in Figures 2C and 2D, respectively) for the apparatus shown in figure 2C and figure 2D. As explained above for such embodiments, the distance d between the first lens ETL1 and the second lens ETL2 equals the sum of the focal length $f_1$ of the first lens ETL1 and the focal length $f_2$ of the second lens ETL2. Therefore, by using means for adjusting the focal length $f_1$ of the first lens ETL1 and the focal length $f_2$ of the second lens ETL2 such that the relationship of figure 12A is met, displaced light beam axes parallel to the optical axis A are obtained at different target displacements.

Figure 12B shows a relationship between the focal length $f_1$ of the first lens ETL1 and an offset variation $\Delta h2$ (or equivalently target displacement variation) of the displaced light beam axes. In particular, the offset variation $\Delta h2$ is a difference between the offsets of the displaced light beam axis for the particular focal length $f_1$ and the smallest offset achievable within a range of focal lengths $f_1$ of the first lens ETL1, the smallest offset being achieved with a focal length $f_1$ of the first lens ETL1 being equal to 80 mm. Figure 12B shows the relationships for offsets $h_1$, labelled as h1C in figures 2C and 2D, from 1 mm to 3 mm.

Figures 12C and 12D show relationships for the apparatus of figures 9A and 9C. The light propagation distance d4 from the third lens ETL3 to the second lens ETL2 is set to 80 mm. The distance d between the first lens ETL1 and the second lens ETL2 is set to 200 mm. The distance d5 from the first lens ETL1 to the intersection of the axis of a light beam, resulting from a propagation from the second lens ETL2 to and through the first lens ETL1, with the hollow roof mirror HM1 is set to 100 mm. The hollow-roof mirror HM1 redirects the light beam back towards the first lens ETL1, resulting in the input light beam axis BAS being at an offset h1S of 2.5 mm from the light beam axis outputted from the first lens ETL1 or, equivalently, from the optical axis A of the first and second lenses ELT1, ETL2.

In figure 12C, values of the focal length $f_3$ of the third lens ETL3 are plotted as a function of values of the focal length $f_2$ of the second lens ETL2 to keep the distance diS from the second lens ETL2 to the target plane TS constant. The target plane TS being where the beam waist of the displaced beam DBS is to be found. The relationship between the two focal lengths is shown for different values of the distance diS, ranging from 150mm to 200mm.

Figure 12D shows a relationship between a diameter of the beam waist of the displaced beam DBS and the focal length $f_2$ of the second lens ETL2 for the apparatus shown in figures 9A and 9C. The distance diS from the second lens ETL2 to the target plane TS is set to 180 mm and kept constant such that a beam waist is formed on the target plane TS for any radial coordinate accessible with the different values of the focal length $f_2$ of the second lens ETL2 considered in the graph of figure 12D.

As schematically shown in the figures, the expressions "light beam axis" or "beam axis" refer to the central propagation axis of the light beam, or equivalently, when representing the beam with a ray fan in a ray optics representation, to the beam chief ray.

Although not shown in the figures, the apparatus of each figure comprises means for adjusting a focal length for each of the lenses in the corresponding figure, for example an apparatus for adjusting electrical parameters of electrically tuneable lenses and/or small mechanical actuators, such that the lens focal length is adjusted.

In the present disclosure, when an ordinal number (such as "first", "second", "third" and so on) is used as an adjective before a term, that ordinal number is used (unless expressly specified otherwise) merely to indicate a particular feature, such as to distinguish that particular feature from another feature that is described by the same term or by a similar term. For example, a "first widget" may be so named merely to distinguish it from, e.g., a "second widget". Thus, the mere usage of the ordinal numbers "first" and "second" before the term "widget" does not indicate any other relationship between the two widgets, and likewise does not indicate any other characteristics of either or both widgets. For example, the mere usage of the ordinal numbers "first" and "second" before the term "widget" (1) does not indicate that either widget comes sequentially before or after any other in order or location; (2) does not indicate that either widget occurs or acts before or after any other in time; and (3) does not indicate that either widget ranks above or below any other, as in importance or quality. In addition, the mere usage of ordinal numbers does not define a numerical limit to the features identified with the ordinal numbers. For example, the mere usage of the ordinal numbers "first" and "second" before the term "widget" does not indicate that there must be no more than two widgets.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. An apparatus for displacing an input light beam axis (BAA) of an input light beam (IBA) and/or changing a direction of the input light beam axis (BAA) of the input light beam (IBA), comprising:

- a first lens (ETL1) having a focal length (f1A, f1B) that is adjustable, the first lens (ETL1) comprising a front principal point (PP1); the front principal point (PP1) being at an offset (h1A) from an intersection between the front principal plane (CP1) of the first lens and a straight line comprising the input light beam axis (BAA);
- a second lens (ETL2) having a focal length (f2A, f2B) that is adjustable; the second lens (ETL2) being arranged sequentially after the first lens (ETL1) and comprising a front principal plane (CP2) at a distance (d) from a back principal plane (CP1) of the first lens (ETL1);
- means for adjusting the focal length (f1A, f1B) of the first lens (ETL1) such that the focal length (f1A, f1B) of the first lens sets an intersection point (IPA, IPB) between two straight lines:

- a first straight line having a target direction (TDA) and passing through a front nodal point (NP2) of the second lens (ETL2), and
- a second straight line comprising a light beam axis (LA, LB) of an intermediate light beam propagating from the first lens (ETL1) to the second lens (ETL2) and resulting from propagation of the input light beam (IBA) through the first lens (ETL1);

- means for adjusting the focal length (f2A, f2B) of the second lens (ETL2) such that the focal length (f2A, f2B) of the second lens (ETL2) equals a distance between the front principal plane (CP2) of the second lens (ETL2) and the intersection point (IPA, IPB);

wherein a direction of a displaced and/or deflected light beam axis (DAA, DAB) of a light beam (DBA, DBB) outputted from the second lens (ETL2) is parallel to the target direction (TDA).

2. The apparatus of claim 1, further comprising a third lens (ETL3) having a focal length (f3E, f3F) that is adjustable for controlling a degree of focusing of a displaced and/or deflected light beam; the third lens (ETL3) comprising a back principal plane, wherein the third lens (ETL3) is arranged sequentially before the first lens (ETL1), the back principal plane of the third lens (ETL3) being at a distance (d3) from the front principal plane of the first lens (ETL1); the apparatus comprising means for adjusting the focal length (f3E, f3F) of the third lens (ETL3) such that the input light beam (IBE, IBF) propagating from the third lens (ETL3) to the first lens (ETL1) resulting from a light beam propagating through the third lens (ETL3) would focus on an image plane (CKE, CKF) being a conjugate focal plane of another plane generated by the rest of the apparatus following the third lens (ETL3) and arranged sequentially after the second lens (ETL2) at a distance (diE) from the back principal point of the second lens (ETL2).

3. The apparatus of any one of the previous claims, comprising means for receiving a collimated input light beam (IBA, IBC).

4. The apparatus of any one of the previous claims, wherein the means for adjusting the focal length (f1C, f1D) of the first lens (ETL1) and the focal length (f2C, f2D) of the second lens (ETL2) is configured to keep a sum of the focal length (f1C, f1D) of the first lens (ETL1) and the focal length (f2C, f2D) of the second lens (ETL2) equal to the distance (d) between the back principal plane (CP1) of the first lens (ETL1) and the front principal plane (CP2) of the second lens (ETL2).

5. The apparatus of any one of the previous claims, comprising an adjustable beam expander arranged sequentially before the first lens (ETL1) and the second lens (ETL2).

6. The apparatus of claim 5, wherein the adjustable beam expander comprises a first additional lens (ETL4) comprising a back principal plane, and a second additional lens (ETL5) comprising a front principal plane; the first additional lens (ETL4) being arranged sequentially before the second additional lens (ETL5); the back principal plane of the first additional lens (ETL4) being at a distance (d2) from the front principal plane of the second additional lens (ETL5), the distance (d2) between the first and second additional lenses (ETL4, ETL5) equal to a multiple (m) of the distance (d) between the first and second lenses (ETL1, ETL2); the first additional lens (ETL4) having a focal length (f4K, f4L) that is adjustable and equal to the multiple (m) of the effective focal length (f2K, f2L) of the second lens (ETL2); the second additional lens (ETL5) having a focal length (f5K, f5L) that is adjustable and equal to the multiple (m) of the focal length (f1K, f1L) of the first lens (ETL1); wherein a sum of the focal length (f4K, f4L, f5K, f5L) of the first and second additional lenses (ETL4, ETL5) equals the distance (d2) between the back principal plane of the first additional lens (ETL4) and the front principal plane of the second additional lens (ETL5).

7. The apparatus of claim 5, wherein the adjustable beam expander comprises the first lens (ETL1) arranged sequentially after the second lens (ETL2); the apparatus further comprising means for redirecting (HM1) a light beam axis outputted from the first lens (ETL1) back to the first lens (ETL1), preferably parallelly to the light beam axis outputted from the first lens (ETL1), and at an offset (h1P) from an intersection between the front principal plane of the first lens (ETL1) and a straight line comprising the light beam axis outputted from the first lens (ETL1).

8. The apparatus of claim 7 further comprising means for redirecting (M1) an input light beam axis (BAP$_{in}$), preferably to be collinear to the optical axis of the adjustable beam expander, the means for redirecting (M1) the input light beam axis (BAP$_{in}$) being arranged sequentially before the adjustable beam expander.

9. The apparatus of any of claims 7-8, further comprising means for moving the means for redirecting (HM1) a light beam axis outputted from the first lens (ETL1), preferably wherein the means for moving are means for rotating, about an optical axis (A) of the first lens (ETL1), the means for redirecting (HM1) a light beam axis outputted from the first lens (ETL1).

10. The apparatus of any one of the previous claims, further comprising means for parallelly displacing (P1) by a constant distance the displaced and/or deflected light beam axis (DAP, DAQ), the means for parallelly displacing (P1) by a constant distance the displaced and/or deflected beam being arranged sequentially after the second lens (ETL2).

11. The apparatus of claim 10 when depending upon claim 9, further comprising means for synchronously moving:

    - the means for parallelly displacing (P1) by a constant distance the displaced and/or deflected beam with
    - a movement of the means for redirecting (HM1) a light beam axis outputted from the first lens (ETL1) caused by the means for moving the means for redirecting (HM1).

12. The apparatus of claim 11, further comprising:

    - means for redirecting (HM2, HM3) outside the aperture of the lens a light beam outputted from the second lens (ETL2) to the first lens (ETL1) and for redirecting a light beam outputted from the first lens (ETL1) to the second lens (ETL2);
    - a plate (M2) having a front mirror face and a back mirror face, the front mirror face being arranged sequentially before the adjustable beam expander;
    - means for directing (HM4) the displaced and/or deflected light beam axis from the second lens (ETL2) to the back mirror face of the plate (M2);
    - a rotatable shaft (e1) mechanically connected to:

        • the means for redirecting (HM1) a light beam axis outputted from the first lens (ETL1) back to the first lens (ETL1), and to
        • the means for directing (HM4) the displaced and/or deflected light beam axis from the second lens (ETL2) to the back mirror face of the plate (M2).

13. A method for displacing an input light beam axis (BAA) of an input light beam (IBA) and/or changing a direction of the input light beam axis (BAA) of the input light beam (IBA), the method comprising steps of:

    - the input light beam (IBA) propagating through a first lens (ETL1) and the resulting intermediate light beam subsequently propagating through a second lens (ETL2); the first lens (ETL1) comprising a front principal point (PP1) at an offset (h1A) from an intersection between the front principal plane (CP1) of the first lens and a straight line comprising the input light beam axis (BAA); the second lens (ETL2) comprising a front principal plane (CP2) arranged at a distance (d) from the back principal plane (CP1) of the first lens (ETL1);
    - adjusting a focal length (f1A, f1B) of the first lens (ETL1) such that the focal length (f1A, f1B) of the first lens sets an intersection point (IPA, IPB) between two straight lines:

        - a first straight line having a target direction (TDA) and passing through the front nodal point (NP2) of the second lens (ETL2), and
        - a second straight line comprising a light beam axis (LA) of an intermediate light beam propagating from the first lens (ETL1) to the second lens (ETL2) and resulting from propagation of the input light beam (IBA) through the first lens (ETL1);

    - adjusting the focal length (f2A, f2B) of the second lens (ETL2) such that the focal length (f2A, f2B) of the second lens (ETL2) equals a distance between the front principal plane (CP2) of the second lens (ETL2) and the intersection point (IPA, IPB);

    wherein a direction of a displaced and/or deflected light beam axis (DBA, DBB) of a light beam (DBA, DBB) outputted from the second lens (ETL2) is parallel to the target direction (TDA).

14. The method of claim 13, comprising adjusting a degree of focusing of a displaced and/or deflected light beam through:

    - a light beam propagating through a third lens (ETL3); wherein the step of the light beam propagating through the third lens (ETL3) is performed prior to the step of the input light beam propagating through the first lens (ETL1) comprising the front principal point (PP1) at an offset (h1E, h1F) from an intersection between the front principal plane (CP1) of the first lens (ETL1) and a straight line comprising the input light beam axis (IBE, IBF); and
    - adjusting a focal length (f3E, f3F) of the third lens (ETL3) such that the input light beam propagating from the third lens (ETL3) to the first lens (ETL1) resulting from a light beam propagating through the third lens (ETL3) would focus on an image plane (CKE, CKF) being a conjugate focal plane of target plane generated by the rest of the apparatus following the third lens (ETL3) and arranged sequentially after the second lens (ETL2) at a distance (diE) from the back principal plane of the second lens (ETL2).

15. The method of claim 13 or 14, comprising a step of expanding or reducing a light beam size performed prior to the step of the input light beam (IBP, IBQ) propagating through the first lens (ETL1); wherein an expansion or reduction factor of the light beam size is adjusted when adjusting the focal length (f1P, f1Q) of the first lens (ETL1) and/or the focal length (f2P, f2Q) of the second lens (ETL2) such that a beam size of the light beam defined by the displaced and/or deflected light beam axis is adjusted.

16. The method of claim 15, wherein the step of expanding or reducing a light beam size comprises performing the following steps prior to the step of the input light beam (IBP, IBQ) propagating through the first lens (ETL1):

- obtaining the input light beam from propagation of a light beam through the second lens (ETL2) and, subsequently, through the first lens (ETL1), and, preferably, from
- redirecting, preferably parallelly, the magnified light beam after the propagation through the first lens (ETL1) at an offset to the front principal point of the first lens (ETL1).

FIG. 1

FIG. 2A

FIG. 2B

FIG. 2C

FIG. 2D

FIG. 3

FIG. 4

FIG. 5

FIG. 6A

FIG. 6B

FIG. 7A

FIG. 7B

FIG. 8A

FIG. 8B

FIG. 8C

FIG. 9A

FIG. 9B

EP 4 246 207 A1

FIG. 9C

FIG. 9D

FIG. 10A

FIG. 10B

FIG. 11A

FIG. 11B

FIG. 12A

FIG. 12B

FIG. 12C

FIG. 12D

Europäisches
Patentamt

European
Patent Office

Office européen
des brevets

**EUROPEAN SEARCH REPORT**

Application Number

EP 22 38 2246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2015/055078 A1 (JOHNSTONE ROSS [US] ET AL) 26 February 2015 (2015-02-26) | 1 | INV. G02B26/10 |
| Y | * figure 2 * | 5,10 | G02B26/08 |
| A | | 2-4,6-9, 11-16 | |
| | ----- | | |
| X | WO 2018/151802 A1 (OHIO STATE INNOVATION FOUNDATION [US]) 23 August 2018 (2018-08-23) | 1-3 | |
| Y | * figures 1-3 * | 5 | |
| | ----- | | |
| X | US 2021/333443 A1 (GOPINATH JULIET T [US] ET AL) 28 October 2021 (2021-10-28) | 1,3 | |
| A | * paragraphs [0031] - [0035]; figures 1,2 * * paragraphs [0043], [0044]; figure 8 * | 13-16 | |
| | ----- | | |
| Y | WO 2018/067828 A1 (SAIKOU OPTICS INCORPORATED [US]) 12 April 2018 (2018-04-12) | 10 | |
| | * figure 2 * | | TECHNICAL FIELDS SEARCHED (IPC) |
| | ----- | | |
| X | US 2020/007232 A1 (CAHOY KERRI [US] ET AL) 2 January 2020 (2020-01-02) | 1,2 | G02B |
| | * paragraph [0062]; figure 1b * | | |
| | ----- | | |

The present search report has been drawn up for all claims

| Place of search | Date of completion of the search | Examiner |
|---|---|---|
| Munich | 3 August 2022 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2246

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2022

| Patent document cited in search report | | Publication date | Patent family member(s) | | Publication date |
|---|---|---|---|---|---|
| US 2015055078 | A1 | 26-02-2015 | CA | 2921976 A1 | 26-02-2015 |
| | | | CN | 105637389 A | 01-06-2016 |
| | | | EP | 3036569 A1 | 29-06-2016 |
| | | | JP | 2016536642 A | 24-11-2016 |
| | | | US | 2015055078 A1 | 26-02-2015 |
| | | | WO | 2015027152 A1 | 26-02-2015 |
| WO 2018151802 | A1 | 23-08-2018 | CN | 110431452 A | 08-11-2019 |
| | | | US | 2019369303 A1 | 05-12-2019 |
| | | | WO | 2018151802 A1 | 23-08-2018 |
| US 2021333443 | A1 | 28-10-2021 | US | 2021333443 A1 | 28-10-2021 |
| | | | WO | 2018097869 A2 | 31-05-2018 |
| WO 2018067828 | A1 | 12-04-2018 | NONE | | |
| US 2020007232 | A1 | 02-01-2020 | US | 2020007232 A1 | 02-01-2020 |
| | | | WO | 2019246418 A1 | 26-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018097869 A2
- US 20150055078 A1